(19) **Europäisches Patentamt / European Patent Office / Office européen des brevets**

(11) **EP 4 682 205 A1**

(12) # EUROPEAN PATENT APPLICATION
published in accordance with Art. 153(4) EPC

(43) Date of publication:
**21.01.2026 Bulletin 2026/04**

(21) Application number: **24770944.7**

(22) Date of filing: **13.03.2024**

(51) International Patent Classification (IPC):
$C08L\ 71/02^{(2006.01)}$    $C01B\ 32/21^{(2017.01)}$
$C08L\ 83/06^{(2006.01)}$    $H01M\ 4/36^{(2006.01)}$
$H01M\ 4/133^{(2010.01)}$    $H01M\ 4/587^{(2010.01)}$
$H01M\ 4/1393^{(2010.01)}$

(52) Cooperative Patent Classification (CPC):
C01B 32/21; C08L 71/02; C08L 83/06;
H01M 4/133; H01M 4/1393; H01M 4/36;
H01M 4/587; Y02E 60/10

(86) International application number:
**PCT/JP2024/009866**

(87) International publication number:
**WO 2024/190840 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038966**
**13.03.2023 JP 2023038967**
**14.03.2023 JP 2023040025**

(71) Applicant: **Mitsubishi Chemical Corporation**
**Tokyo 100-8251 (JP)**

(72) Inventors:
• **SUGIYAMA Yusuke**
 **Tokyo 100-8251 (JP)**
• **IWADE Miki**
 **Tokyo 100-8251 (JP)**
• **KATO Hanako**
 **Tokyo 100-8251 (JP)**
• **KOYASHIKI Yoshiaki**
 **Tokyo 100-8251 (JP)**

(74) Representative: **Vossius & Partner**
**Patentanwälte Rechtsanwälte mbB**
**Siebertstrasse 3**
**81675 München (DE)**

(54) **CURED PRODUCT, CURED PRODUCT-CONTAINING CARBON MATERIAL, NEGATIVE ELECTRODE, AND NONAQUEOUS SECONDARY BATTERY**

(57) The present invention relates to a cured product containing: a polyoxyalkylene structure; and a three dimensional siloxane structure containing a Q unit. The cured product has a swelling rate in ethyl methyl carbonate of 70 mass% or less.

EP 4 682 205 A1

## Description

Technical Field

The present invention relates to a cured product, a cured product-containing carbon material containing the cured product, a negative electrode, and a nonaqueous secondary battery.

The present invention also relates to a composition, a cured product, a method for manufacturing a cured product, a cured product-containing carbon material, a method for producing a cured product-containing carbon material, a method for manufacturing a negative electrode, and a method for manufacturing a secondary battery.

Background Art

In recent years, with an advance in miniaturization of electronic devices, demands for high-capacity secondary batteries have increased significantly. In particular, secondary batteries, particularly lithium ion secondary batteries, have a high energy density and superior charge-discharge characteristics as compared with nickel-cadmium batteries or nickel-hydrogen batteries, and these batteries have gained attention.

The lithium ion secondary batteries that have been developed and put to practical use include a nonaqueous lithium secondary battery including a positive electrode and a negative electrode capable of storing and releasing lithium ions, and a nonaqueous electrolytic liquid in which a lithium salt such as $LiPF_6$ or $LiBF_4$ is dissolved.

The lithium ion secondary batteries that have been developed and put to practical use include a non-aqueous lithium secondary battery including a positive electrode and a negative electrode capable of storing and releasing lithium ions, and a non-aqueous electrolytic liquid in which a lithium salt such as $LiPF_6$ or $LiBF_4$ is dissolved.

As a negative electrode active material of a lithium ion secondary battery, it was first attempted to use lithium metal. However, it has been found that lithium in the form of dendrite is deposited during repeated charge and discharge, penetrates a separator, and reaches a positive electrode, whereby a short circuit may occur.

Therefore, at present, attention is paid to use of a carbon material as a negative electrode active material, which can prevent deposition of lithium metal by allowing lithium ions to enter and exit between layers in the charge and discharge process.

For example, Patent Literature 1 discloses a negative electrode material for a lithium secondary battery, wherein two or more different polymer materials are attached to different positions of particles (A) selected from the group consisting of carbon material particles, metal particles, and metal oxide particles.

It is said that this material can be manufactured by a simple process and can realize a lithium secondary battery excellent in various battery characteristics such as electrode plate strength, liquid immersion property, initial irreversible capacity, high current density charge-discharge characteristics, and cycle retention rate in a well-balanced manner.

In addition, Patent Literature 2 discloses a carbon material coated with a compound produced by crosslinking a water-soluble polymer with a silane coupling agent.

Citation List

Patent Literature

Patent Literature 1: JP 2007-042285 A
Patent Literature 2: JP H09-161848 A

Summary of Invention

Technical Problem

When a carbon material such as graphite is used as a negative electrode active material of a lithium ion secondary battery, lithium ions are considered to be intercalated from an edge portion in a graphene structure of the carbon material.

However, lithium ions are solvated with a solvent in an electrolytic liquid, and when the solvated lithium ions are intercalated into the carbon material, the interlayer inside of the graphene structure is destroyed. As a result, the function as the negative electrode active material is deteriorated, and the life of the lithium ion secondary battery is shortened.

As a measure for this, a method of adding, as an additive, a compound that forms a coating film on the edge portion of the graphene structure during charge to the electrolytic liquid is conceivable. This promotes desolvation of lithium ions when the lithium ions are intercalated, and improves durability as a negative electrode active material.

However, the addition of an additive to an electrolytic liquid has a trade-off such as an influence on a positive electrode or a decrease in lithium ion conductivity in the electrolytic liquid, and the amount and type of compound that can be added are limited.

Therefore, in Patent Literature 1, two or more different polymer materials are attached to carbon material particles, thereby improving the durability as a negative electrode active material. On the other hand, the polymer material is difficult to cover the edge portion in the graphene structure of the carbon material, and there is room for improvement from the viewpoint of durability, that is, stable negative electrode operation.

Accordingly, a first object of the present invention is to provide a carbon material which can perform a stable negative electrode operation when used as a negative electrode active material of a lithium ion secondary battery. Another object of the present invention is to provide a method for manufacturing the carbon material, and a method for manufacturing a negative electrode and a method for manufacturing a secondary battery using the carbon material.

In addition, when a carbon material coated with a compound containing a three dimensional siloxane structure which does not contain a Q unit is used in a negative electrode of a secondary battery as in Patent Literature 2, an elution rate and a swelling rate in water or organic solvent cannot be sufficiently reduced. A high elution rate in water causes elution of a component derived from a water-soluble polymer from a coating layer to occur significantly when a slurry is manufactured in an aqueous system using the carbon material after coating, and thus, the coating layer is removed or damaged by a mechanical treatment such as kneading. A high elution rate in organic solvent causes elution of a component derived from a water-soluble polymer to occur inside the secondary battery, and thus, the charge-discharge efficiency and durability of the secondary battery are deteriorated due to defects. In addition, a high swelling rate in water or organic solvent requires a large amount of energy or time to remove water or an organic solvent from the negative electrode at the time of coating the carbon material or at the time of manufacturing the secondary battery, and thus productivity is deteriorated, and water or an organic solvent which is not completely removed remains in the secondary battery at the time of manufacturing the secondary battery, and thus the charge-discharge efficiency and durability of the secondary battery are deteriorated. Even if the elution rate in water or organic solvent is low, a high swelling rate in water or organic solvent causes the electrolytic liquid to come into contact with the surface of the carbon material, and thus, a decomposition reaction of the electrolytic liquid cannot be suppressed, and durability of the secondary battery is deteriorated.

Accordingly, a second object of the present invention is to provide a cured product capable of achieving sufficient reductions in elution rate and swelling rate in water or organic solvent, and a composition for producing the cured product.

Solution to Problem

As a result of intensive studies to solve the above issues, the present inventors have found that, for the first object, if a structure that promotes desolvation of an electrolytic liquid can be introduced into an edge portion in a graphene structure of a carbon material, a stable negative electrode operation can be performed without adding an additive to the electrolytic liquid, and the like, and have completed the present invention.

That is, an aspect A and an aspect B, which are the first gist of the present invention, are as follows.

Aspect A

[A1] A carbon material having a modifying component bonded to a carbon material raw material, wherein

the modifying component contains at least one element selected from the group consisting of boron, aluminum, silicon, phosphorus, sulfur, and germanium, and

a value represented by x/y (atom% $\cdot$g/m$^2$) is from 0.05 to 1 atom%$\cdot$g/m$^2$, where x (atom%) is a total atomic concentration of the at least one element in the carbon material and y (m$^2$/g) is a specific surface area of the carbon material.

[A2] The carbon material according to [A1], wherein an integrated area of pores having a pore size of 1 nm or less, as determined by pore size distribution analysis using the Grand Canonical Monte Carlo (GCMC) method as a molecular simulation method, is 0.01 m$^2$/g or less.

[A3] The carbon material according to [A1] or [A2], wherein a total content of the modifying component in the carbon material is 1 vol% or less.

[A4] The carbon material according to any one of [A1] to [A3], wherein the modifying component has a molecular weight of 500 or less.

[A5] The carbon material according to any one of [A1] to [A4], wherein the value represented by x/y (atom%·g/m$^2$) is from 0.07 to 0.8 atom%·g/m$^2$.

[A6] The carbon material according to any one of [A1] to [A5], wherein the carbon material raw material contains at least one of artificial graphite or natural graphite.

[A7] The carbon material according to [A6], wherein the carbon material raw material contains natural graphite.

[A8] The carbon material according to any one of [A1] to [A7], wherein

the modifying component contains silicon as the at least one element, and
x(Si), which is an atomic concentration of silicon in the carbon material, is from 0.1 to 15 atom%.

[A9] The carbon material according to any one of [A1] to [A8], wherein y, which is the specific surface area of the carbon material, is from 1 to 15 m$^2$/g.

[A10] The carbon material according to any one of [A1] to [A9], wherein a Raman R value represented by the following equation is from 0.01 to 0.7:

Raman R value = (intensity $I_B$ of peak $P_B$ near 1360 cm$^{-1}$ in Raman spectrum analysis)/(intensity $I_A$ of peak $P_A$ near 1580 cm$^{-1}$ in Raman spectrum analysis).

[A11] A method for manufacturing a negative electrode, the method including forming a negative electrode active material layer on a current collector by using the carbon material according to any one of [A1] to [A10] to produce a negative electrode.

[A12] A method for manufacturing a secondary battery including a positive electrode, a negative electrode, and an electrolyte, the method including forming a negative electrode active material layer on a current collector by using the carbon material according to any one of [A1] to [A10] to produce the negative electrode.

Aspect B

[B1] A method for manufacturing a carbon material containing a carbon material raw material and silicon atoms as a constituent element, the method including mixing the carbon material raw material and a silicon-containing compound in a manner that a value represented by x/y (atom%·g/m$^2$) is from 0.05 to 1 atom%·g/m$^2$, where x (atom%) is an atomic concentration of silicon atoms in the carbon material and y (m$^2$/g) is a specific surface area of the carbon material.

[B2] The method for manufacturing a carbon material according to [B1], further including heating a mixture produced in the step of mixing.

As a result of intensive studies to solve the above issues, the present inventors have found that, for the second object, a cured product containing: a polyoxyalkylene structure; and a three dimensional siloxane structure containing a Q unit can achieve sufficient reductions in elution rate and swelling rate in water or organic solvent, and thus have arrived at the present invention.

That is, an aspect C, an aspect D, and an aspect E, which are the second gist of the present invention, are as follows.

Aspect C

[C1] A composition containing:

a compound (A) containing a polyoxyalkylene structure; and
a crosslinkable siloxane compound (B) containing a Q unit,
wherein
the compound (A) has at least two crosslinkable silicon units per molecule.

[C2] The composition according to [C1], wherein a content proportion of the polyoxyalkylene structure in the composition is from 10 mass% to 60 mass%.

[C3] The composition according to [C1] or [C2], wherein a total content proportion of the Q units in the composition is from 10 mass% to 50 mass%.

[C4] The composition according to any one of [C1] to [C3], wherein the compound (A) contains a crosslinkable silicon unit.

[C5] The composition according to any one of [C1] to [C4], further containing a solvent.

[C6] The composition according to any one of [C1] to [C5], further containing a boron-containing compound (C).

[C7] The composition according to any one of [C1] to [C6], wherein the composition is a thermosetting composition.

Aspect D

[D1] A cured product containing:

a polyoxyalkylene structure; and
a three dimensional siloxane structure containing a Q unit,
the cured product having a swelling rate in ethyl methyl carbonate of 70 mass% or less.

[D2] The cured product according to [D1], wherein a content proportion of the polyoxyalkylene structure in the cured product is from 20 mass% to 80 mass%.

[D3] The cured product according to [D1] or [D2], wherein a content proportion of silicon atoms in the cured product is from 10 mass% to 40 mass%.

[D4] The cured product according to any one of [D1] to [D3], wherein a total content proportion of the Q units in the cured product is from 20 mass% to 60 mass%.

[D5] The cured product according to any one of [D1] to [D4], wherein, after the cured product is hydrolyzed, the hydrolyzed cured product includes a polyoxyalkylene structure and a fragment having at least two silicon atoms per molecule.

[D6] A cured product-containing carbon material containing:

the cured product described in any one of [D1] to [D5]; and
a carbon material.

[D7] The cured product-containing carbon material according to [D6], wherein

the carbon material has a modifying component bonded to a carbon material raw material, and
the modifying component contains at least one element selected from the group consisting of boron, aluminum, silicon, phosphorus, sulfur, and germanium.

[D8] The cured product-containing carbon material according to [D7], wherein the modifying component has a binding site capable of binding to the carbon material.

[D9] The cured product-containing carbon material according to [D7] or [D8], wherein the modifying component has a molecular weight of 500 or less.

[D10] The cured product-containing carbon material according to any one of [D7] to [D9], wherein the modifying component is represented by General Formula (1):

$$(Z)_n\text{-}L\text{-}W \qquad (1)$$

where

Z is a group capable of chemically binding to the carbon material,
W is a group containing at least one element selected from the group consisting of boron, aluminum, silicon, phosphorus, sulfur, and germanium,
L is a linker, and
n is 1 or 2.

[D11] The cured product-containing carbon material according to [D10], wherein, in General Formula (1), W is a silicon-containing group.

[D12] The cured product-containing carbon material according to [D10] or [D11], wherein Z in General Formula (1) contains a structure capable of being added by a Diels-Alder reaction.

[D13] The cured product-containing carbon material according to any one of [D10] to [D12], wherein Z in General Formula (1) is a group containing an unsaturated bond at a terminal.

[D14] The cured product-containing carbon material according to any one of [D10] to [D13], wherein Z in General Formula (1) is a vinyl group.

[D15] The cured product-containing carbon material according to any one of [D6] to [D14], wherein a surface of the carbon material contains a carbon-carbon unsaturated bond and a carbon radical structure.

[D16] A negative electrode containing the cured product-containing carbon material described in any one of [D6] to [D15].

[D17] A nonaqueous secondary battery including: a positive electrode and a negative electrode capable of storing and releasing lithium ions; and

> an electrolyte,
> wherein
> the negative electrode contains the cured product-containing carbon material described in any one of [D6] to [D15].

Aspect E

[E1] A method for manufacturing a cured product, the method including heating the composition described in any one of [C1] to [C7].

[E2] A method for manufacturing a cured product-containing carbon material, the method including heating the composition described in any one of [C1] to [C7] in the presence of a carbon material.

[E3] The method for manufacturing a cured product-containing carbon material according to [E2], wherein the cured product-containing carbon material is used as a negative electrode active material.

[E4] A method for manufacturing a negative electrode, the method including forming a negative electrode active material layer on a current collector by using the cured product-containing carbon material produced by the manufacturing method described in [E3], to produce a negative electrode.

[E5] A method for manufacturing a secondary battery including a positive electrode, a negative electrode, and an electrolyte, the method including forming a negative electrode active material layer on a current collector by using the cured product-containing carbon material produced by the manufacturing method described in [E3], to produce the negative electrode.

In addition, an aspect F, which is the third gist of the present invention for the first object and the second object of the present invention, is as follows.

Aspect F

[F1] A method for modifying a carbon material, the method including binding a modifying component to a carbon material.

[F2] The modification method according to [F1], wherein the modifying component contains at least one element selected from the group consisting of boron, aluminum, silicon, phosphorus, and germanium.

[F3] The modification method according to [F1] or [F2], wherein the modifying component has a binding site capable of binding to a carbon material.

[F4] The modification method according to any one of [F1] to [F3], wherein the modifying component has a molecular weight of 500 or less.

[F5] The modification method according to any one of [F1] to [F4], wherein the modifying component is represented by General Formula (1):

$$(Z)_n\text{-}L\text{-}W \qquad (1)$$

where

> Z is a group capable of chemically binding to the carbon material,
> W is a group containing at least one element selected from the group consisting of boron, aluminum, silicon, phosphorus, sulfur, and germanium,
> L is a linker, and
> n is 1 or 2.

[F6] The modification method according to [F5], wherein, in General Formula (1), W is a silicon-containing group.

[F7] The modification method according to [F5] or [F6], wherein Z in General Formula (1) contains a structure capable of being added by a Diels-Alder reaction.

[F8] The modification method according to any one of [F5] to [F7], wherein Z in General Formula (1) is a group containing an unsaturated bond at a terminal.

[F9] The modification method according to any one of [F5] to [F8], wherein Z in General Formula (1) is a vinyl group.

[F10] The modification method according to any one of [F1] to [F9], wherein a surface of the carbon material contains a carbon-carbon unsaturated bond and a carbon radical structure.

[F11] The modification method according to any one of [F1] to [F10], wherein, in the step of binding the modifying component to the carbon material, the carbon material is physically contacted with the modifying component.

[F12] The modification method according to any one of [F1] to [F11], further including heating at 120°C or higher.

[F13] The modification method according to any one of [F1] to [F12], further including, after the step of binding the modifying component to the carbon material, bringing, into contact with the resulting carbon material, a polymer containing at least one element selected from the group consisting of boron, aluminum, silicon, phosphorus, sulfur, and germanium.

[F14] The modification method according to [F13], further including heating at 120°C or higher.

[F15] A modification method including bringing, into contact with a carbon material to which a modifying component is bonded, a polymer containing at least one element selected from the group consisting of boron, aluminum, silicon, phosphorus, sulfur and germanium.

[F16] The modification method according to [F15], further including heating at 120°C or higher.

Advantageous Effects of Invention

For the first object, the carbon material according to the present invention enables a stable negative electrode operation when used as a negative electrode active material of a lithium ion secondary battery, and can realize a high initial efficiency while maintaining a good initial discharge capacity. Further, the method for manufacturing a carbon material according to the present invention can provide an excellent carbon material as described above.

Furthermore, the method for manufacturing a negative electrode and the method for producing a secondary battery according to the present invention can provide an excellent negative electrode and an excellent secondary battery, each of which contains the excellent carbon material as described above as a negative electrode active material.

For the second object, the cured product according to the present invention can achieve sufficient reductions in elution rates and swelling rates in water and organic solvent. In addition, the composition according to the present invention can provide a cured product capable of achieving sufficient reductions in elution rates and swelling rates in water and organic solvent.

Description of Embodiments

Hereinafter, the present invention will be described in detail, but the present invention is not limited to the following embodiments and can be carried out with various modifications within the scope of the gist thereof. In the present specification, a numerical range expressed by using the term "to" means that the numerical values or physical property values before and after "to" are included in the numerical range. Further, mass% and wt.%, and parts by mass and parts by weight are synonymous.

Carbon Material

For the first object, the carbon material according to the present embodiment preferably has a modifying component bonded to a carbon material raw material. The modifying component contains at least one element selected from the group consisting of boron, aluminum, silicon, phosphorus, sulfur, and germanium (hereinafter, sometimes referred to as "constituent element of the modifying component").

A value represented by x/y (atom%·g/m$^2$) is preferably from 0.05 to 1 atom%·g/m$^2$, where x (atom%) is a total atomic concentration of the constituent elements of the modifying component in the carbon material and y (m$^2$/g) is a specific surface area of the carbon material.

When the modifying component in the present embodiment contains silicon, the carbon material according to the present embodiment contains a carbon material raw material and silicon atoms as the constituent element. A value represented by $x_{(Si)}/y$ (atom%·g/m$^2$) is preferably from 0.05 to 1 atom%·g/m$^2$, more preferably from 0.07 to 0.8 atom%·g/m$^2$, and still more preferably from 0.3 to 1 atom%·g/m$^2$, where $x_{(Si)}$ (atom%) is an atomic concentration of silicon atoms in the carbon material and y (m$^2$/g) is a specific surface area of the carbon material.

The carbon material containing silicon atoms as the constituent element enables an edge portion of the graphene structure in the carbon material raw material to have a structure that promotes desolvation of lithium ions solvated with an electrolytic liquid in a lithium ion secondary battery.

Although the reason for this is not clear, it is presumable as follows. Since a silicon atom can form a covalent bond with a carbon atom, a strong bond is easily formed at the edge portion of the graphene structure in the carbon material raw material. As a result of the binding, the graphene structure on an electrochemically active edge surface is replaced with silicon oxide having low reactivity, and thus lithium ions solvated with the electrolytic liquid in the lithium ion secondary battery are easily desolvated in a state where side reactions are suppressed at the edge portion. And thus, side reactions on the surface of the carbon material and destruction of the interlayer inside of the graphene structure can be suppressed.

When the modifying component in the present embodiment contains aluminum, the carbon material according to the present embodiment contains a carbon material raw material and aluminum atoms as a constituent element. A value represented by $x_{(Al)}/y$ (atom%·g/m$^2$) is preferably from 0.05 to 1 atom%·g/m$^2$, where $x_{(Al)}$ (atom%) is an atomic concentration of aluminum atoms in the carbon material and $y$ (m$^2$/g) is a specific surface area of the carbon material.

The carbon material containing aluminum atoms as the constituent element enables an edge portion of the graphene structure in the carbon material raw material to have a structure that promotes desolvation of lithium ions solvated with an electrolytic liquid in a lithium ion secondary battery.

Although the reason for this is not clear, it is presumable as follows. Since an aluminium halide or an aluminum alkoxide can be converted into a sol-gel by acidification, an aluminum atom thereof easily binds to an acidic functional group derived from the edge portion of the graphene structure in the carbon material raw material. As a result of the binding, the chemically stable aluminum suppresses the reactivity of the graphene structure on the electrochemically active edge surface, and the lithium ions solvated with the electrolytic liquid in the lithium ion secondary battery are easily desolvated at the edge portion in a state where side reactions with the electrolytic liquid are suppressed. And thus, side reactions on the surface of the carbon material and destruction of the interlayer inside of the graphene structure can be suppressed.

The value represented by $x/y$ (atom%·g/m$^2$) in the present embodiment indicates a ratio of the total atomic concentration $x$ (atom%) of the constituent elements of the modifying component in the carbon material to the specific surface area $y$ (m$^2$/g) of the carbon material. When the value is 0.05 atom%·g/m$^2$ or more, an effect of reducing side reactions by the modifying component can be suitably exhibited. In addition, when the value represented by $x/y$ (atom%·g/m$^2$) is 1 atom%·g/m$^2$ or less, an increase in transfer resistance of the lithium ions due to the modifying component can be suppressed.

In the present specification, the atomic concentration $x$ (atom%) of the constituent element of the modifying component in the carbon material is a value as measured by X-ray photoelectron spectroscopy (XPS), and specifically, a value as measured under conditions described in Examples described later.

In addition, the specific surface area $y$ (m$^2$/g) of the carbon material is a value as determined by a nitrogen adsorption single-point BET method from results of nitrogen adsorption-desorption measurement based on a gas flow method, and specifically, is a value as measured under conditions described in Examples described later.

The value represented by $x/y$ (atom%·g/m$^2$) in the present embodiment is preferably from 0.05 to 1 atom%·g/m$^2$, more preferably from 0.07 to 0.8 atom%·g/m$^2$, and still more preferably from 0.3 to 1 atom%·g/m$^2$. From the viewpoint of the effect of reducing side reactions, the value is preferably 0.05 atom%·g/m$^2$ or more, more preferably 0.07 atom%·g/m$^2$ or more, still more preferably 0.1 atom%·g/m$^2$ or more, and yet still more preferably 0.15 atom%·g/m$^2$ or more, and may be 0.3 atom%·g/m$^2$ or more, 0.4 atom%·g/m$^2$ or more, or 0.5 atom%·g/m$^2$ or more. In addition, from the viewpoint of suppressing an increase in resistance, the value is preferably 1 atom%·g/m$^2$ or less, more preferably 0.9 atom%·g/m$^2$ or less, and still more preferably 0.8 atom%·g/m$^2$ or less.

The value represented by $x_{(Si)}/y$ (atom%·g/m$^2$) in the present embodiment is preferably from 0.05 to 1 atom%·g/m$^2$, more preferably from 0.07 to 0.8 atom%·g/m$^2$, and still more preferably from 0.3 to 1 atom%·g/m$^2$. From the viewpoint of the effect of reducing side reactions, the value is preferably 0.05 atom%·g/m$^2$ or more, more preferably 0.07 atom%·g/m$^2$ or more, more preferably 0.3 atom%·g/m$^2$ or more, still more preferably 0.4 atom%·g/m$^2$ or more, and yet still more preferably 0.5 atom%·g/m$^2$ or more. In addition, from the viewpoint of suppressing an increase in resistance, the value is preferably 1 atom%·g/m$^2$ or less, more preferably 0.9 atom%·g/m$^2$ or less, and still more preferably 0.8 atom%·g/m$^2$ or less.

The value represented by $x_{(Al)}/y$ (atom%·g/m$^2$) in the present embodiment is preferably from 0.05 to 1 atom%·g/m$^2$. From the viewpoint of the effect of reducing side reactions, the value is preferably 0.05 atom%·g/m$^2$ or more, more preferably 0.07 atom%·g/m$^2$ or more, still more preferably 0.1 atom%·g/m$^2$ or more, and yet still more preferably 0.15 atom%·g/m$^2$ or more. In addition, from the viewpoint of suppressing an increase in resistance, the value is preferably 1 atom%·g/m$^2$ or less, more preferably 0.9 atom%·g/m$^2$ or less, and still more preferably 0.8 atom%·g/m$^2$ or less.

The total atomic concentration $x$ (atom%) of the constituent elements of the modifying component in the carbon material according to the present embodiment is preferably from 0.1 to 15 atom%, more preferably from 0.2 to 10 atom%, and still more preferably from 0.3 to 5 atom%. From the viewpoint of the effect of reducing side reactions, the atomic concentration $x$ (atom%) is preferably 0.1 atom% or more, more preferably 0.2 atom% or more, and still more preferably 0.3 atom% or more. In addition, from the viewpoint of suppressing an increase in resistance, the atomic concentration x (atom%) is preferably 15 atom% or less, more preferably 10 atom% or less, and still more preferably 5 atom% or less.

In the present embodiment, it is more preferable that the value represented by x/y (atom%·g/m$^2$) be from 0.05 to 1 atom%·g/m$^2$, and that the atomic concentration x (atom%) be from 0.1 to 15 atom%.

The atomic concentration $x_{(Si)}$ (atom%) of silicon atoms in the carbon material according to the present embodiment is preferably from 0.1 to 15 atom%, more preferably from 0.2 to 10 atom%, and still more preferably from 0.3 to 5 atom%. From the viewpoint of the effect of reducing side reactions, the atomic concentration $x_{(Si)}$ (atom%) is preferably 0.1 atom% or more, more preferably 0.2 atom% or more, and still more preferably 0.3 atom% or more. In addition, from the viewpoint of suppressing an increase in resistance, the atomic concentration $x_{(Si)}$ (atom%) is preferably 15 atom% or less, more preferably 10 atom% or less, and still more preferably 5 atom% or less.

The atomic concentration $x_{(Al)}$ (atom%) of aluminum atoms in the carbon material according to the present embodiment is preferably from 0.1 to 15 atom%, more preferably from 0.2 to 10 atom%, and still more preferably from 0.3 to 5 atom%. From the viewpoint of the effect of reducing side reactions, the atomic concentration $x_{(Al)}$ (atom%) is preferably 0.1 atom% or more, more preferably 0.2 atom% or more, and still more preferably 0.3 atom% or more. In addition, from the viewpoint of suppressing an increase in resistance, the atomic concentration x (atom%) is preferably 15 atom% or less, more preferably 10 atom% or less, and still more preferably 5 atom% or less.

The specific surface area y (m$^2$/g) of the carbon material according to the present embodiment is preferably from 1 to 15 m$^2$/g, more preferably from 1.2 to 10 m$^2$/g, and still more preferably from 1.4 to 5 m$^2$/g. From the viewpoint of sufficiently securing sites where lithium ions are intercalated/deintercalated and achieving good high-speed charge-discharge characteristics and output characteristics, the specific surface area y (m$^2$/g) is preferably 1 m$^2$/g or more, more preferably 1.2 m$^2$/g or more, and still more preferably 1.4 m$^2$/g or more. In addition, from the viewpoint of moderately suppressing the activity of the negative electrode active material with respect to the electrolytic liquid, suppressing an increase in initial irreversible capacity, and realizing a high capacity, the specific surface area y (m$^2$/g) is preferably 15 m$^2$/g or less, more preferably 10 m$^2$/g or less, and still more preferably 5 m$^2$/g or less.

In the present embodiment, it is more preferable that the value represented by x/y (atom%·g/m$^2$) be from 0.05 to 1 atom%·g/m$^2$, and that the specific surface area y (m$^2$/g) be from 1 to 15 m$^2$/g. It is also more preferable that the atomic concentration x (atom%) be from 0.1 to 15 atom% and that the specific surface area y (m$^2$/g) be from 1 to 15 m$^2$/g. Further, it is still more preferable that the value represented by x/y (atom%·g/m$^2$) be from 0.05 to 1 atom%·g/m$^2$, that the atomic concentration x (atom%) be from 0.1 to 15 atom%, and that the specific surface area y (m$^2$/g) be from 1 to 15 m$^2$/g.

The carbon material according to the present embodiment also preferably contains phosphorus atoms as the modifying component, more preferably further contains phosphorus atoms in addition to aluminum atoms, and still more preferably has an atomic concentration of phosphorus atoms in the carbon material of from 0.1 to 1 when the atomic concentration of aluminum atoms in the carbon material is 1. Accordingly, when the carbon material according to the present embodiment is used as a negative electrode active material of a lithium ion secondary battery, higher initial efficiency can be realized.

Although the reason why the initial efficiency is further increased by incorporating phosphorus atoms, in addition to aluminum atoms, as the constituent element is not clear, it is presumable as follows.

Aluminum phosphate is partially generated by a reaction of phosphoric acid and aluminum, high chemical stability and micropores are formed, and thus more stable desolvation can be performed.

The atomic concentration of phosphorus atoms in the carbon material, that is, the atomic concentration ratio of phosphorus atoms, when the atomic concentration of aluminum atoms in the carbon material is 1, is preferably from 0.1 to 1, more preferably from 0.15 to 0.95, and still more preferably from 0.2 to 0.9. From the viewpoint of suitably achieving the effect of incorporating phosphorus atoms, the atomic concentration ratio of phosphorus atoms is preferably 0.1 or more, more preferably 0.15 or more, and still more preferably 0.2 or more. In addition, from the viewpoint of suppressing an increase in battery resistance, the atomic concentration ratio of phosphorus atoms is preferably 1 or less, more preferably 0.95 or less, and still more preferably 0.9 or less.

A preferred range of the atomic concentration of phosphorus atoms in the carbon material varies depending on the atomic concentration of aluminum atoms in the carbon material, but is, for example, preferably from 0.01 to 15 atom%, more preferably from 0.02 to 10 atom%, and still more preferably from 0.03 to 5 atom%. From the viewpoint of suitably achieving the effect of incorporating phosphorus atoms, the atomic concentration of phosphorus atoms is preferably 0.01 atom% or more, more preferably 0.02 atom% or more, and still more preferably 0.03 atom% or more. In addition, from the viewpoint of potential capacity, the atomic concentration of phosphorus atoms is preferably 15 atom% or less, more preferably 10 atom% or less, and still more preferably 5 atom% or less.

An integrated area of pores having a pore size of 1 nm or less of the carbon material according to the present embodiment, as determined by pore size distribution analysis using the Grand Canonical Monte Carlo method (GCMC) as a molecular simulation method, is preferably 0.01 m$^2$/g or less.

Simulation of adsorption by the GCMC method as a molecular simulation method is a method of simulating the amount of adsorption at a certain pore size and a certain pressure. Specifically, interaction parameters such as the pore size, shape, adsorbed molecules, and surface atoms of an adsorbent are determined, and the adsorbed molecules are actually put into the virtual space of the pores to move, generate, and eliminate the adsorbed molecules. Then, an operation of accepting the state when the energy of the system becomes negative (stable) and returning the state to the original state when the energy becomes positive is repeated to obtain the adsorption amount as described above.

By selecting the pore structure (slit, cylinder, cage) and determining parameters of an adsorbate and the adsorbent, theoretical adsorption isotherms at various pore sizes are derived using GCMC. An isotherm obtained by integrating the theoretical adsorption isotherm and an actually measured isotherm are fitted to each other, and a pore distribution curve in which an error of the adsorption amount is minimized is calculated, whereby pore distribution analysis of the entire region from micropores to mesopores can be performed.

As parameters of interactions between $N_2$ molecules and interactions between graphite/$N_2$ molecules, for example, parameters determined by Sweatman, M. B. et al., "J. Phys. Chem., 105, 1403 (2001)" can be used.

In particular, the $N_2$ adsorption isotherm is measured using BELSORP MINI II available from MicrotracBEL Corp., and analysis is performed using the analysis rate analysis BELMasterT under the following conditions.

Measurement: BELSORP MINI II, an automatic specific surface area/pore distribution measuring apparatus, available from MicrotracBEL Corp.

Measurement temperature: 77 K
Adsorbate: $N_2$
Pretreatment condition: 100°C, 3 hours
Analysis: BELMaster (trade mark) V6.3.00
Distribution function: No-assumption
Pore size definition: Solid and Fluid def. PoreSize
Model: GCMC
Pore structure: Slit
Adsorbent: C

The integrated area of the pores having a pore size of 1 nm or less, as determined by the GCMC method, is preferably 0.01 $m^2$/g or less, and more preferably 0 $m^2$/g or less, from the viewpoint of suppressing decomposition by the electrolytic liquid.

Also, the integrated area of the pores having a pore size of 1.5 nm or less, as determined by the GCMC method, is preferably 0.01 $m^2$/g or less, and more preferably 0 $m^2$/g or less, from the viewpoint of suppressing decomposition by the electrolytic liquid.

The Raman R value of the carbon material according to the present embodiment is preferably from 0.01 to 0.7, more preferably from 0.02 to 0.65, and still more preferably from 0.03 to 0.6. When the density is increased, it is difficult for crystals to be oriented in plane orientation, and thus, charge-discharge incapability characteristics decrease. From the viewpoint of avoiding such a decrease in charge-discharge incapability characteristics, the Raman R value is preferably 0.01 or more, more preferably 0.02 or more, and still more preferably 0.03 or more. In addition, from the viewpoint of suppressing an increase in irreversible capacity as a negative electrode active material and achieving good initial efficiency and long-term storage recovery rate, and from the viewpoint of suppressing an excessive reaction with the electrolytic liquid and preventing a decrease in charge-discharge efficiency and an increase in gas generation, the Raman R value is preferably 0.7 or less, preferably 0.65 or less, and more preferably 0.6 or less.

The Raman R value of the carbon material can be adjusted by a content proportion of an amorphous carbon material in the carbon material raw material described below, a heating temperature during manufacture of the carbon material raw material, and the like.

In the present specification, the Raman R value is a value represented by the following equation:

Raman R value = (intensity $I_B$ of peak $P_B$ near 1360 $cm^{-1}$ in Raman spectrum analysis)/(intensity $I_A$ of peak $P_A$ near 1580 $cm^{-1}$ in Raman spectrum analysis).

In the above equation, "near 1580 $cm^{-1}$" refers to a range of from 1580 $cm^{-1}$ to 1620 $cm^{-1}$. In addition, "near 1360 $cm^{-1}$" refers to a range of from 1350 $cm^{-1}$ to 1370 $cm^{-1}$.

Here, the peak $P_A$ near 1580 $cm^{-1}$ is a peak called a G band derived from the graphite structure, and the peak $P_B$ near 1360 $cm^{-1}$ is a peak called a D band that appears when the symmetry is disturbed by introduction of defects.

The crystallinity purity and the proportion of defects of the carbon material can be evaluated by the Raman R value using these.

The Raman spectrum is obtained through measurement using a Raman spectrometer.

Specifically, the carbon material is naturally dropped into a measurement cell to fill the measurement cell with the carbon material, and measurement is performed while the inside of the measurement cell is irradiated with argon ion laser light and the measurement cell is rotated in a plane perpendicular to the laser light. The measurement conditions are as follows.

Wavelength of argon ion laser light: 514.5 nm
Laser power on sample: 25 mW
Resolution: 4 cm$^{-1}$
Measurement range: 1100 cm$^{-1}$ to 1730 cm$^{-1}$

Peak intensity measurement, peak half-width measurement: background processing, smoothing processing (convolution by simple average of 5 points)

As a surface functional group amount of the carbon material according to the present embodiment, an O/C value indicating a surface oxygen concentration is preferably from 0.01% to 4%, more preferably from 0.1% to 4%, still more preferably from 0.3% to 3.6%, and still more preferably from 0.5% to 3%. From the viewpoint of strengthening the interaction between the surface of the carbon material and an organic compound and preventing the organic compound from being removed, the surface functional group amount O/C value is preferably 0.01% or more, more preferably 0.1% or more, still more preferably 0.3% or more, and particularly preferably 0.5% or more. In addition, from the viewpoint of facilitating adjustment of the O/C value by an oxidation treatment or the like, improving productivity and reducing costs, the surface functional group amount O/C value is preferably 4% or less, more preferably 3.6% or less, and still more preferably 3% or less.

A volume-based average particle size d50 of the carbon material according to the present embodiment is preferably from 1 to 50 μm, more preferably from 4 to 30 μm, and still more preferably from 6 to 25 μm. From the viewpoint of preventing the specific surface area from becoming too large and suppressing the activity with respect to the electrolytic liquid, the average particle size d50 is usually 1 μm or more, preferably 4 μm or more, and more preferably 6 μm or more. From the viewpoint of suppressing process disadvantages such as streaking when an electrode plate is formed, the average particle size d50 is usually 50 μm or less, preferably 30 μm or less, and more preferably 25 μm or less.

The volume-based average particle size d50 of the carbon material is a value of a volume-based median size as measured by a laser diffraction/scattering particle size distribution analyzer, and can be adjusted by, for example, pulverization, crushing, classification, or the like.

An aspect ratio of the carbon material according to the present embodiment is preferably from 1 to 10, more preferably from 1.1 to 8, still more preferably from 1.1 to 5, and yet still more preferably from 1.2 to 3. The aspect ratio is theoretically 1 or more, and from the viewpoint of making streaking less likely to occur when an electrode plate is formed, producing a uniform coating surface, and achieving good high current density charge-discharge characteristics, the aspect ratio is preferably 1.1 or more, and more preferably 1.2 or more. From the same viewpoint, the aspect ratio is preferably 10 or less, more preferably 8 or less, still more preferably 5 or less, and particularly preferably 3 or less.

A pore volume of pores having a pore size in a range of from 10 nm to 1000 nm of the carbon material according to the present embodiment is preferably from 0.05 to 0.3 mL/g, more preferably from 0.07 to 0.28 mL/g, and still more preferably from 0.1 to 0.25 mL/g. From the viewpoint of deposition of lithium metal during rapid charge and the strength of the electrode plate, the pore volume is preferably 0.05 mL/g or more, more preferably 0.07 mL/g or more, and still more preferably 0.1 mL/g or more. From the same viewpoint, the pore volume is preferably 0.3 mL/g or less, more preferably 0.28 mL/g or less, and still more preferably 0.25 mL/g or less.

The pore volume of the pores having a pore size in the range of from 10 nm to 1000 nm described above is a value as measured by a mercury intrusion method using mercury porosimetry.

A total pore volume of the carbon material according to the present embodiment is preferably from 0.1 to 10 mL/g, more preferably from 0.2 to 5 mL/g, still more preferably from 0.25 to 2 mL/g, and yet still more preferably from 0.5 to 1 mL/g. From the viewpoint of an effect of dispersing a thickener and a binder at the time of electrode plate formation, the total pore volume is preferably 0.1 mL/g or more, more preferably 0.2 mL/g or more, still more preferably 0.25 mL/g or more, and yet still more preferably 0.5 mL/g or more. From the same viewpoint, the total pore volume is preferably 10 mL/g or less, more preferably 5 mL/g or less, still more preferably 2 mL/g or less, and yet still more preferably 1 mL/g or less.

The total pore volume can be adjusted by heating the carbon material.

The total pore volume in the present specification is a value as measured by the mercury intrusion method using a mercury porosimeter.

The average pore size of the carbon material according to the present embodiment is preferably from 0.03 to 80 μm, more preferably from 0.05 to 50 μm, still more preferably from 0.1 to 50 μm, and yet still more preferably from 0.5 to 20 μm. From the viewpoint of an amount of the binder at the time of electrode plate formation and the high current density charge-discharge characteristics of the battery, the average pore size is preferably 0.03 μm or more, more preferably 0.05 μm or more, still more preferably 0.1 μm or more, and yet still more preferably 0.5 μm or more. From the same viewpoint, the average pore size is preferably 80 μm or less, more preferably 50 μm or less, and still more preferably 20 μm or less.

A tap density of the carbon material according to the present embodiment is usually from 0.1 to 1.3 g/cm$^3$, preferably from 0.15 to 1.2 g/cm$^3$, more preferably from 0.2 to 1.2 g/cm$^3$, and still more preferably from 0.3 to 1.1 g/cm$^3$. From the viewpoint of achieving good high-speed charge-discharge characteristics, the tap density is usually 0.1 g/cm$^3$ or more, preferably 0.15 g/cm$^3$ or more, more preferably 0.2 g/cm$^3$ or more, and still more preferably 0.3 g/cm$^3$ or more. From the viewpoint of suppressing an increase in carbon density in particles, suppressing a decrease in rollability, and producing a high-density negative electrode sheet, the tap density is usually 1.3 g/cm$^3$ or less, preferably 1.2 g/cm$^3$ or less, and more preferably 1.1 g/cm$^3$ or less.

The tap density in the present specification is a density value calculated from the volume and the mass of a sample when the sample is fully filled in a cylindrical tap cell having a diameter of 1.6 cm and a volume capacity of 20 cm$^3$ and then tapped under conditions of a stroke length of 10 mm and the number of taps of 1000 times using a powder density measuring instrument.

Carbon Material Raw Material

The carbon material according to the present embodiment preferably has a modifying component bonded to a carbon material raw material, and preferably contains the carbon material raw material and, as a constituent element of the modifying component, at least one element selected from the group consisting of boron, aluminum, silicon, phosphorus, sulfur, and germanium.

The carbon material more preferably contains silicon or aluminum as the constituent element of the modifying component, and in the case of containing aluminum, still more preferably further contains phosphorus.

The carbon material raw material in the present embodiment is not particularly limited, and carbon material raw materials having various degrees of graphitization from graphite to amorphous carbon material raw materials can be used, and one type of carbon material raw material may be used alone or two or more types thereof may be used in combination.

From the viewpoint of commercial availability, the carbon material raw material preferably contains at least one of graphite or a raw material carbon (amorphous carbon) material having a small degree of graphitization, and more preferably contains graphite. The graphite and the amorphous carbon are preferable also from the viewpoint of charge-discharge characteristics at a high current density.

A content proportion of the graphite in the carbon material raw material of the present embodiment is preferably from 90 to 100 mass%, and more preferably from 95 to 99 mass%, and the type and content proportion of the graphite in the carbon material raw material may be appropriately adjusted in a manner that physical properties such as a d002 value desired as a carbon material can be realized.

When the carbon material raw material in the present embodiment contains graphite, the carbon material raw material preferably contains at least one of artificial graphite or natural graphite, more preferably contains natural graphite from the viewpoint of a large specific surface area and an effect of improving the initial efficiency, and more preferably contains artificial graphite from the viewpoint of cycle characteristics.

The graphite preferably contains a small amount of impurities, and the graphite may be used after being subjected to various purification treatments as necessary.

Examples of the natural graphite include amorphous graphite, scale-like graphite, and scaly graphite. Among these, from the viewpoint of a high degree of graphitization and a small amount of impurities, scale-like graphite or scaly graphite is preferred, and scaly graphite is more preferred. Furthermore, spheroidized natural graphite may be used from the viewpoint of the filling property of particles and the charge-discharge load characteristics by forming suitable dense pores inside the carbon material.

Examples of the artificial graphite include those prepared by graphitizing, by heating at 2500°C or higher, an organic substance such as coal tar pitch, coal-based heavy oil, reduced crude, petroleum-based heavy oil, aromatic hydrocarbon, nitrogen-containing cyclic compound, sulfur-containing cyclic compound, polyphenylene, polyvinyl chloride, polyvinyl alcohol, polyacrylonitrile, polyvinyl butyral, natural polymer, polyphenylene sulfide, polyphenylene oxide, furfuryl alcohol resin, phenol-formaldehyde resin, or imide resin.

As the carbon material raw material in the present embodiment, it is preferable to employ a carbon material raw material that allows the resulting carbon material to satisfy desired physical properties.

For example, since the Raman R value of the carbon material raw material and the Raman R value of the resulting carbon material are the same value, in a case where it is desired to prepare a carbon material having a Raman R value of from 0.01 to 0.7, it is preferable to use a carbon material raw material also having a Raman R value of from 0.01 to 0.7. That is, the Raman R value of the carbon material raw material is preferably from 0.01 to 0.7, more preferably from 0.02 to 0.65, and still more preferably from 0.03 to 0.6. When the density is increased, it is difficult for crystals to be oriented in plane orientation, and thus, charge-discharge incapability characteristics decrease. For the resulting carbon material, from the viewpoint of avoiding such a decrease in charge-discharge incapability characteristics, the Raman R value is preferably 0.01 or more, more preferably 0.02 or more, and still more preferably 0.03 or more. In addition, for the resulting carbon material, from the viewpoint of suppressing an increase in irreversible capacity as a negative electrode active material and achieving good initial efficiency and long-term storage recovery rate, and from the viewpoint of suppressing an excessive reaction with the electrolytic liquid and preventing a decrease in charge-discharge efficiency and an increase in gas generation, the Raman R value is preferably 0.7 or less, preferably 0.65 or less, and more preferably 0.6 or less.

The Raman R value of the carbon material raw material can be adjusted by the content proportion of the amorphous carbon material, the heating temperature during manufacture of the carbon material raw material, and the like.

Modifying Component

The modifying component in the present embodiment preferably contains at least one element selected from the group consisting of boron, aluminum, silicon, phosphorus, sulfur, and germanium, and more preferably has a binding site capable of binding to a carbon material.

In addition, in order to control the reactivity of the modifying component, a manufacturing method described below is usually used for the carbon material.

The modifying component preferably has a molecular weight of 500 or less, and more preferably has a structure represented by the following formula (1):

$$(Z)_n\text{-L-W} \qquad (1)$$

where

Z is a group capable of chemically binding to the carbon material,
W is a group containing at least one element selected from the group consisting of boron, aluminum, silicon, phosphorus, sulfur, and germanium,
L is a linker, and
n is 1 or 2.

A total content of the modifying components in the carbon material according to the present embodiment is usually 1 vol% or less.

• Site Capable of Chemically Binding to Carbon Material

Examples of surface structures of the carbon material include a structure including a carbon-carbon unsaturated bond and a carbon radical structure. Z in General Formula (1) is not particularly limited as long as it is a group that forms a bond with the above groups, and a known group can be used.

From the viewpoint of being capable of forming a bond to a structure containing a carbon-carbon unsaturated bond among the surface structures of the carbon material, Z in General Formula (1) preferably contains a structure capable of addition by a Diels-Alder reaction, more preferably is a group having an unsaturated bond at a terminal, and still more preferably is a vinyl group.

• Silicon Atoms

Silicon atoms as a constituent element of the modifying component contained in the carbon material according to the present embodiment are introduced by reacting a silicon-containing compound with the carbon material raw material.

For example, by binding silicon atoms to carbon atoms of the carbon material raw material, silicon atoms are present also on the surface of the carbon material raw material, and silicon atoms are present also at the edge portion of the graphene structure in the carbon material raw material. This makes it possible to promote desolvation, while suppressing side reactions, with respect to solvated lithium ions to be intercalated from the edge portion of the graphene structure.

The atomic concentration $x_{(Si)}$ (atom%) of silicon atoms in the carbon material according to the present embodiment is preferably a value such that the value represented by $x_{(Si)}/y$ (atom%·g/m$^2$) described above is from 0.05 to 1 atom% ·g/m$^2$, and more preferably a value such that the value is from 0.07 to 0.8 atom%·g/m$^2$.

The atomic concentration $x_{(Si)}$ (atom%) of silicon atoms can be adjusted by adjusting the amount of the silicon-containing compound to be added to the carbon material raw material.

• Aluminum Atoms

Aluminum atoms as a constituent element of the modifying component contained in the carbon material according to the present embodiment are introduced by directly or indirectly reacting an aluminum-containing compound with the carbon material raw material.

For example, by binding aluminum atoms to carbon atoms of the carbon material raw material, aluminum atoms are present also on the surface of the carbon material raw material, and aluminum atom are present also at the edge portion of the graphene structure in the carbon material raw material. This makes it possible to promote desolvation, while suppressing side reactions, with respect to solvated lithium ions to be intercalated from the edge portion of the graphene structure.

The atomic concentration $x_{(Al)}$ (atom%) of aluminum atoms in the carbon material according to the present embodiment is not particularly limited as long as the value represented by $x_{(Al)}/y$ (atom%·g/m$^2$) described above is from 0.05 to 1 atom%·g/m$^2$, and specifically, is preferably from 0.1 to 15 atom%.

The atomic concentration $x_{(Al)}$ (atom%) of aluminum atoms can be adjusted by adjusting the amount of the aluminum-containing compound to be added to the carbon material raw material.

• Phosphorus Atoms

Phosphorus atoms as a constituent element of the modifying component contained in the carbon material according to the present embodiment are introduced by reacting a phosphorus-containing compound with the carbon material raw material.

For example, by binding phosphorus atoms to carbon atoms of the carbon material raw material, phosphorus atoms are present also on the surface of the carbon material raw material, and phosphorus atoms are present also at the edge portion of the graphene structure in the carbon material raw material. When aluminum and phosphorus are contained as constituent elements of the modifying component, aluminum selectively reacts with phosphorus atoms, thereby making it possible to more suitably promote desolvation, while suppressing side reactions, with respect to solvated lithium ions to be intercalated from the edge portion of the graphene structure.

When aluminum and phosphorus are contained as constituent elements of the modifying component, the atomic concentration of phosphorus atoms in the carbon material according to the present embodiment is preferably adjusted to from 0.1 to 1 when the atomic concentration of aluminum atoms in the carbon material is 1 as described above, and specifically, is preferably 0.01 to 15 atom%, for example, although it varies depending on the atomic concentration of aluminum atoms.

The atomic concentration (atom%) of phosphorus atoms can be adjusted by adjusting the amount of the phosphorus-containing compound to be added to the carbon material raw material.

• Boron, Sulfur, and Germanium

Boron atoms as a constituent element of the modifying component contained in the carbon material according to the present embodiment are introduced by reacting a boron-containing compound with the carbon material raw material.

Sulfur atoms as a constituent element of the modifying component contained in the carbon material according to the present embodiment are introduced by reacting a sulfur-containing compound with the carbon material raw material.

Germanium atoms as a constituent element of the modifying component contained in the carbon material according to the present embodiment are introduced by reacting a germanium-containing compound with the carbon material raw material.

The molecular weight of the modifying component in the present embodiment is preferably 500 or less, more preferably from 100 to 500, and still more preferably from 100 to 400. From the viewpoint of facilitating modification, the molecular weight is preferably 500 or less, more preferably 400 or less, and still more preferably 300 or less.

It is more preferable that the modifying component in the present embodiment contain silicon or aluminum, and that the molecular weight of the modifying component be 500 or less. In addition, it is more preferable that the modifying component in the present embodiment contain silicon or aluminum, and that the total content of the modifying component in the carbon material be 1 vol% or less. Further, it is more preferable that the modifying component contain silicon or aluminum, that the total content of the modifying component in the carbon material be 1 vol% or less, and that the molecular weight of the modifying component be 500 or less.

• Linker

The linker represented by L in General Formula (1) is a single bond or an (n + 1)-valent hydrocarbon group having from 1 to 6 carbon atoms. n is 1 or 2, and n is preferably 1 from the viewpoint of controlling the reactivity. Examples of the hydrocarbon group include aliphatic hydrocarbon groups such as an alkylene group and an alkenylene group, and aromatic hydrocarbon groups such as a phenylene group. From the viewpoint of accomplishing the reaction of the modifying component, the linker is preferably a single bond or an (n + 1)-valent aliphatic hydrocarbon group having from 1 to 6 carbon atoms, more preferably a single bond or an (n + 1)-valent alkylene group having from 1 to 6 carbon atoms, and still more preferably a single bond or a divalent alkylene group having from 1 to 6 carbon atoms.

Additional Component

The carbon material according to the present embodiment may contain an additional component in addition to the carbon material raw material and silicon, aluminum, phosphorus, boron, sulfur atoms, and germanium as the constituent elements of the modifying component, as long as the effects of the present invention are not impaired.

Examples of the additional component include metal particles, metal oxide particles, organic compounds, and complexes thereof.

Examples of the metal constituting the metal particles or the metal oxide particles include metals capable of being alloyed with lithium, such as Sn and Bi.

As the organic compound, a compound having a plurality of hydroxyl groups or groups capable of self-crosslinking by heat or light in the molecule is preferable from the viewpoint of forming a strong coating film. Examples of the compound include polyvinyl alcohol-based resins, polyol-based resins such as acrylic polyol resins, polyester polyol resins, and polyether polyol resins, silicone resins, epoxy resins, and acrylic resins and polyester resins having a hydrolyzable silyl group.

Among these, polyvinyl alcohol-based resins, acrylic polyol resins, polyester polyol resins, and acrylic resins and polyester resins having a hydrolyzable silyl group are more preferable, polyvinyl alcohol-based resins, acrylic polyol resins, and polyester polyol resins are still more preferable, and polyvinyl alcohol-based resins are particularly preferable from the viewpoint of solvent resistance as the negative electrode active material layer.

The specific structure of the polyvinyl alcohol-based resin is not particularly limited as long as the polyvinyl alcohol-based resin is a resin having a vinyl alcohol structural unit. Typically, the polyvinyl alcohol-based resin is produced by saponifying a polycarboxylic acid vinyl ester prepared by polymerizing a carboxylic acid vinyl ester monomer such as vinyl acetate, but is not limited thereto.

A total content proportion of the additional components in the carbon material according to the present embodiment is preferably from 0.5 to 15 mass%, more preferably from 1 to 10 mass%, and still more preferably from 1.5 to 7 mass%. In a case where the additional components are contained, from the viewpoint of achieving the effects thereof, the total content proportion is preferably 0.5 mass% or more, more preferably 1 mass% or more, and still more preferably 1.5 mass% or more. In addition, from the viewpoint of securing the capacity of the battery, the total content proportion is preferably 15 mass% or less, more preferably 10 mass% or less, and still more preferably 7 mass% or less.

Method for Manufacturing Carbon Material

The carbon material according to the present embodiment includes mixing a carbon material raw material and a compound serving as a modifying component in a manner that a value represented by $x/y$ (atom%·g/m$^2$) is from 0.05 to 1 atom%·g/m$^2$, where $x$ (atom%) is a total atomic concentration of constituent elements of the modifying component and $y$ (m$^2$/g) is a specific surface area of the carbon material.

The method preferably further includes heating a mixture produced in the step of mixing.

For example, in a case where the modifying component contains a silicon atom as a constituent element, the carbon material according to the present embodiment includes mixing the carbon material raw material and the compound serving as the modifying component in a manner that a value represented by $x_{(Si)}/y$ (atom%·g/m$^2$) is from 0.05 to 1 atom%·g/m$^2$, where $x_{(Si)}$ (atom%) is an atomic concentration of silicon atoms and $y$ (m$^2$/g) is a specific surface area of the carbon material.

The method preferably further includes heating a mixture produced in the step of mixing.

The atomic concentration $x_{(Si)}$ (atom%) of silicon atoms in the carbon material is preferably from 0.1 to 15 atom%, more preferably from 0.2 to 10 atom%, and still more preferably from 0.3 to 5 atom%.

The specific surface area $y$ (m$^2$/g) of the carbon material is preferably from 1 to 15 m$^2$/g, more preferably from 1.2 to 10 m$^2$/g, and still more preferably from 1.4 to 5 m$^2$/g.

In a case where aluminum atoms are contained as a constituent element of the modifying component, the carbon material according to the present embodiment includes mixing a carbon material raw material and an aluminum-containing compound in a manner that a value represented by $x_{(Al)}/y$ (atom%·g/m$^2$) is from 0.05 to 1 atom%·g/m$^2$, where $x_{(Al)}$ (atom%) is an atomic concentration of aluminum atoms and $y$ (m$^2$/g) is a specific surface area of the carbon material.

The method preferably further includes heating a mixture produced in the step of mixing.

In the step of mixing, it is preferable to further mix a phosphorus-containing compound with the mixture, it is more preferable to mix the carbon material raw material and the phosphorus-containing compound and then further mix an aluminum-containing compound with the mixture, and it is still more preferable to mix the carbon material raw material and the phosphorus-containing compound to prepare a phosphoric acid group-containing carbon material raw material and then further mix an aluminum-containing compound with the phosphoric acid group-containing carbon material raw material.

The atomic concentration $x_{(Al)}$ (atom%) of aluminum atoms in the carbon material is preferably from 0.1 to 15 atom%, more preferably from 0.2 to 10 atom%, and still more preferably from 0.3 to 5 atom%.

The specific surface area y (m$^2$/g) of the carbon material is preferably from 1 to 15 m$^2$/g, more preferably from 1.2 to 10 m$^2$/g, and still more preferably from 1.4 to 5 m$^2$/g.

In a case where a phosphorus-containing compound is further mixed with the mixture in the step of mixing, a content proportion of phosphorus atoms in the resulting carbon material is preferably from 0.1 to 1, more preferably from 0.15 to 0.95, and still more preferably from 0.2 to 0.9 in terms of atomic concentration ratio when the atomic concentration of aluminum atoms is 1.

Hereinafter, each component will be described.

Mixing Step

In the step of mixing the carbon material raw material and the compound serving as the modifying component, that is, the silicon-containing compound, the aluminum-containing compound, or the like, the same carbon material raw material as that described in the Carbon Material Raw Material in the above Carbon Material can be used as the carbon material raw material, and preferred embodiments are also the same.

For example, the carbon material raw material preferably contains at least one selected from the group consisting of artificial graphite and natural graphite. The Raman R value of the carbon material raw material is preferably from 0.01 to 0.7, more preferably from 0.02 to 0.65, and still more preferably from 0.03 to 0.6.

The carbon material raw material may be produced by further subjecting the carbon material raw material to a spheroidization treatment.

The spheroidization treatment is a treatment in which mechanical actions such as compression, friction, and shear force (mainly, impact force), including interaction of particles, are repeatedly applied to particles to perform spheroidization. In an apparatus for performing the spheroidization, for example, a rotor having a large number of blades installed inside a casing is provided, and the rotor is rotated at a high speed to give a mechanical action such as impact, compression, friction, or shear force to the carbon material raw material introduced inside, thereby performing a surface treatment.

Before mixing the carbon material raw material and the compound serving as the modifying component, the carbon material raw material may be subjected to an isotropic pressurization treatment.

By isotropically pressurizing the carbon material raw material, internal voids of the carbon material raw material are compressed. As a result, the density of the carbon material raw material crushed after the pressurization treatment increases, and high-speed charge characteristics can be improved.

In addition, by isotropically pressurizing the carbon material raw material, flattening of the particles is less likely to occur, the particles can maintain the spherical shape, and a decrease in fluidity when the carbon material raw material is slurried can also be prevented.

As a pressurizing means, a roll compactor, a roll press, a pricket machine, a cold isostatic pressing apparatus (CIP), a uniaxial molding machine, a tableting machine, or the like can be used. Among these pressurizing means, a cold isostatic pressing apparatus is preferable from the viewpoint of reducing internal pores while maintaining the particle shape.

When the compound serving as the modifying component is a silicon-containing compound, the silicon-containing compound is not particularly limited as long as a silicon atom binds to the surface of the carbon material raw material, and examples thereof include a silane coupling agent such as alkoxysilane, and a silane compound having an amino group, an epoxy group, an isocyanate group, a vinyl group, or an acetyl group. Among these, a silane compound having a vinyl group or an acetyl group is preferable from the viewpoint of being capable of suppressing reactivity of an unsaturated bond or a radical having a high electron density.

As the alkoxysilane, an alkoxysilane having two or less carbon-silicon bonds is more preferable from the viewpoint of easy removal of a substituent after the reaction and suppression of battery resistance.

Specific examples of the alkoxysilane include tetramethoxysilane, tetraethoxysilane, tetrapropoxysilane, tetrabutoxysilane, methyltrimethoxysilane, ethyltrimethoxysilane, phenyltrimethoxysilane, vinyltrimethoxysilane, methyltriethoxysilane, ethyltriethoxysilane, phenyltriethoxysilane, vinyltriethoxysilane, vinyltris(2-methoxyethoxy)silane, acetyltrimethoxysilane, dimethyldimethoxysilane, diethyldimethoxysilane, methylethyldimethoxysilane, methylphenyldimethoxysilane, and methylvinyldimethoxysilane.

The silane compound having an amino group is not particularly limited as long as it has an amino group, but a compound having two or less carbon-silicon bonds is more preferable in order to suppress battery resistance.

Specific examples of the compound include 3-aminopropyltrimethoxysilane, 3-aminopropyltriethoxysilane, phenylaminopropyltrimethoxysilane, 3-aminoethylaminopropyltrimethoxysilane, and 3-aminoethylaminopropylmethyldimethoxysilane.

The silane compound having an epoxy group is not particularly limited as long as it has an epoxy group, but a compound having two or less carbon-silicon bonds is more preferable in order to suppress battery resistance.

Specific examples of the compound include 3-glycidoxypropyltrimethoxysilane, 3-glycidoxypropyltriethoxysilane, 3-glycidoxypropylmethyldimethoxysilane, 3-glycidoxypropylmethyldiethoxysilane, and 2-(3, 4-epoxycyclohexyl) ethyltrimethoxysilane.

The silane compound having an isocyanate group is not particularly limited as long as it has an isocyanate group, but a compound having two or less carbon-silicon bonds is more preferable in order to suppress battery resistance.

Specific examples of the compound include tetraisocyanatosilane, triisocyanato(methyl)silane, and 3-isocyanatepropyltriethoxysilane.

The silane compound having a vinyl group or an acetyl group is not particularly limited as long as it has a vinyl group or an acetyl group, but a compound having two or less carbon-silicon bonds is more preferable in order to suppress the battery resistance.

Specific examples of the compound include dimethoxymethylvinylsilane, diethoxymethylvinylsilane, dichloromethylvinylsilane, vinyltrimethoxysilane, vinyltriethoxysilane, vinyltriisopropoxysilane, aryltrimethoxysilane, aryltriethoxysilane, trichlorovinylsilane, vinyltris(2-methoxyethoxy) silane, acetyltrimethoxysilane, 2,4,6,8-tetramethyl-2,4,6,8-tetravinylcyclotetrasiloxane, 5-(triethoxysilyl)-2-norbornene, and octavinyloctasilasesquioxane.

A mixing ratio of the carbon material raw material and the silicon-containing compound is adjusted in a manner that the value represented by $x_{(Si)}/y$ (atom%·g/m$^2$) is from 0.05 to 1 atom%·g/m$^2$, where $x_{(Si)}$ (atom%) is an atomic concentration of silicon atoms in the resulting carbon material and y (m$^2$/g) is a specific surface area of the carbon material. Although the specific surface area y (m$^2$/g) of the carbon material and the specific surface area (m$^2$/g) of the carbon material raw material are different from each other in a strict sense, the mixing ratio may be determined by regarding the specific surface areas as the same value when determining the mixing ratio.

When the compound serving as the modifying component is an aluminum-containing compound, the aluminum-containing compound is not particularly limited as long as an aluminum atom binds to the surface of the carbon material raw material, and examples thereof include an aluminum compound that reacts with an acid, and more specifically, alkoxy aluminum, aluminum halide, aluminum hydroxide, aluminum nitrate, and aluminum carbonate. Among them, alkoxy aluminum and aluminum hydroxide are preferable from the viewpoint of the influence of impurities on the battery performance.

As the alkoxy aluminum, one from which the substituent is easily removable after the reaction is more preferable.

Specific examples of the alkoxyaluminum include (ethylacetoacetato) aluminum diisopropoxide, trimethoxyaluminum, triethoxyaluminum, tri(isopropoxy)aluminum, and butoxyaluminum.

As the aluminum halide, one from which the substituent is easily removable after the reaction is more preferable.

Specific examples of the aluminum halide include aluminum fluoride, aluminum chloride, aluminum bromide, and aluminum iodide.

A mixing ratio of the carbon material raw material and the aluminum-containing compound is adjusted in a manner that the value represented by $x_{(Al)}/y$ (atom%·g/m$^2$) is from 0.05 to 1 atom%·g/m$^2$, where $x_{(Al)}$ (atom%) is an atomic concentration of aluminum atoms in the resulting carbon material and y (m$^2$/g) is a specific surface area of the carbon material. Although the specific surface area y (m$^2$/g) of the carbon material and the specific surface area (m$^2$/g) of the carbon material raw material are different from each other in a strict sense, the mixing ratio may be determined by regarding the specific surface areas as the same value when determining the mixing ratio.

Regardless of whether the compound serving as the modifying component is a liquid or a solid, a solvent may be used at mixing the compound serving as the modifying component with the carbon material raw material, and particularly when the compound serving as the modifying component is a solid, a solvent is preferably used from the viewpoint of uniformity during mixing.

The solvent is not particularly limited, and examples thereof include water, ethyl methyl ketone, toluene, acetone, methyl isobutyl ketone, ethanol, methanol, tetrahydrofuran, and ethylene glycol dimethyl ether. Among these, ethanol, methanol, and acetone are preferable from the viewpoint of easy removal.

At mixing the carbon material raw material and the compound serving as the modifying component, an additive or an additional component may be further added.

Examples of the additive include a surfactant that contributes to imparting wettability or adhesiveness to the negative electrode active material or the binder resin; inorganic oxide particles that contribute to reducing the resistance of the coating film; lithium compound particles; conductive polymers such as polyaniline sulfonic acid; and compounds that form complex ions with lithium ions, such as polyethylene oxide and complex hydrides.

Examples of the additional component include the same components as those described in the Additional Component in the above Carbon Material.

In the mixing step in the present embodiment, when the compound serving as the modifying component is an aluminum-containing compound, it is preferable to further mix the phosphorus-containing compound with the carbon material raw material, it is more preferable to mix the carbon material raw material and the phosphorus-containing compound and then further mix an aluminum-containing compound with the mixture, and it is still more preferable to mix the carbon material raw material and the phosphorus-containing compound to prepare a phosphoric acid group-containing carbon material raw material and then further mix an aluminum-containing compound with the phosphoric acid group-containing carbon material raw material, as described above.

The phosphorus-containing compound is not particularly limited as long as a phosphoric acid group binds to the surface of the carbon material raw material, and examples thereof include a vinylphosphonic acid compound and an ethynylphosphonic acid compound. Among these, an aminophosphine compound, a vinylphosphonic acid compound, and an ethynylphosphinic acid compound are preferable from the viewpoint of being capable of forming a strong bond with the edge portion in the graphene structure of the carbon material.

The phosphonic acid is not particularly limited as long as it can form a bond with the edge portion in the graphene structure of the carbon material, but it is more preferable that the phosphonic acid have an unsaturated carbon bond in a part thereof from the viewpoint of being capable of reacting with an unsaturated bond at the edge.

Specific examples of the phosphonic acid include vinylphosphonic acid, dimethyl vinylphosphonate, diethyl vinylphosphonate, dipropyl vinylphosphonate, dibutyl vinylphosphonate, dimethyl allylphosphonate, diethyl allylphosphonate, dipropyl allylphosphonate, dibutyl allylphosphonate, cinnamylphosphonic acid, ethynylphosphonic acid, dimethyl ethynylphosphonate, diethyl ethynylphosphonate, dipropyl ethynylphosphonate, dibutyl ethynylphosphonate, propargyl phosphonic acid, dimethyl propargyl phosphonate, diethyl propargyl phosphonate, dipropyl propargyl phosphonate, and dibutyl propargyl phosphonate.

An amide phosphate compound is not particularly limited as long as it can form a bond with the edge portion in the graphene structure of the carbon material, but is more preferably an amide phosphate ester from the viewpoint of being capable of efficiently reacting with an acid functional group at the edge portion in the graphene structure of the carbon material.

Specific examples of the amide phosphate ester include dimethylphosphoramidate, diethylphosphoramidate, dipropylphosphoramidate, and dibutylphosphoramidate.

A mixing ratio of the carbon material raw material and the phosphorus-containing compound is preferably adjusted in a manner that the atomic concentration of phosphorus atoms in the resulting carbon material is from 0.1 to 1 with respect to the atomic concentration of aluminum atoms in the carbon material.

Regardless of whether the phosphorus-containing compound is a liquid or a solid, and a solvent may be used at mixing the compound serving as the modifying component with the carbon material raw material, and particularly when the phosphorus-containing compound is a solid, a solvent is preferably used from the viewpoint of uniformity during mixing.

The solvent is not particularly limited, and examples thereof include water, ethyl methyl ketone, toluene, acetone, methyl isobutyl ketone, ethanol, methanol, tetrahydrofuran, and ethylene glycol dimethyl ether. Among these, ethanol, methanol, and acetone are preferable from the viewpoint of easy removal.

When the phosphorus-containing compound is mixed with the carbon material raw material to prepare a phosphoric acid group-containing carbon material raw material first, it is preferable to heat a mixture prepared after mixing the phosphorus-containing compound with the carbon material raw material.

A heating temperature is not particularly limited, but is preferably from 60 to 200°C, and more preferably from 100 to 180°C.

A heating time is not particularly limited, but is preferably from 15 minutes to 10 hours, and more preferably from 30 minutes to 2 hours.

An atmosphere during heating is preferably an inert atmosphere from the viewpoint of suppressing an oxidation reaction, and examples thereof include a nitrogen atmosphere, an argon atmosphere, and a helium atmosphere.

After the heating, the phosphoric acid group-containing carbon material raw material may be cooled, washed or dried as necessary, and then mixed with the aluminum-containing compound. By washing, it is possible to remove residues such as excess phosphorus-containing compounds that are not bonded to the carbon material raw material, and it is possible to suppress a decrease in reaction with the aluminum-containing compound, a decrease in battery capacity, an increase in battery resistance, and the like.

For washing, a known solution can be used, and for example, a solvent similar to the solvent used at the time of mixing can be used.

A method for mixing the carbon material raw material and the compound serving as a modifying component is not particularly limited, and a known method can be adopted. Examples of the method include a method of stirring contents in a fixed container using a stirring blade, a method of mixing contents by rolling due to rotation of a container itself, and a method of mixing contents by fluidization by an air stream. Among these, from the viewpoint of mixing uniformity, a method of stirring using a stirring blade in a fixed container is preferable.

In the case of mixing the carbon material raw material and the aluminum-containing compound, among the methods of stirring contents using a stirring blade in a fixed container, it is more preferable to stir a dispersion liquid in which the carbon material raw material is dispersed in a solvent, and to add dropwise a solution containing the aluminum-containing compound thereto.

A mixing time is not particularly limited as long as the carbon material raw material and the compound serving as a modifying component are uniformly mixed, but is preferably from 10 to 90 minutes, and more preferably from 30 to 60 minutes. The mixing time is preferably 10 minutes or more, more preferably 30 minutes or more, and is preferably 90 minutes or less, more preferably 60 minutes or less.

A mixing temperature is not particularly limited, but is preferably from 10 to 80°C, more preferably from 15 to 60°C. The mixing temperature is preferably 10°C or higher, more preferably 15°C or higher, and is preferably 80°C or lower, more preferably 60°C or lower.

Heating Step

In the heating step, a mixture produced in the mixing step is heated. When the compound serving as the modifying component is a silicon-containing compound, a reactive substituent of the silicon-containing compound reacts with an active functional group present at the edge portion of the carbon material raw material by heating, whereby the silicon atom contained in the silicon-containing compound can be bonded to the surface of the carbon material raw material. In addition, in a case where a solvent is used in the mixing step, the solvent can be removed by heating.

In addition, before the heating step, solid-liquid separation may be performed by filtration or the like, and then the heating step may be performed.

In a case where the compound serving as the modifying component is an aluminum-containing compound, when the aluminum-containing compound or the phosphorus-containing compound is a liquid, the aluminum-containing compound or the phosphorus-containing compound is volatilized or decomposed by heating, and a phosphoric acid group based on an aluminum atom or a phosphorus atom contained in the aluminum-containing compound or the phosphorus-containing compound reacts with an active functional group present in the edge portion of the carbon material raw material, whereby the aluminum atom or the phosphorus atom can be bonded to the surface of the carbon material raw material. In addition, in a case where a solvent is used in the mixing step, the solvent can be removed by heating.

In addition, before the heating step, solid-liquid separation may be performed by filtration or the like, and then the heating step may be performed.

A heating temperature is not particularly limited, but is, for example, preferably from 60 to 300°C, more preferably from 100 to 250°C, and still more preferably from 100 to 180°C. Heating at 120°C or higher is also preferable. The heating temperature is preferably 60°C or higher, more preferably 100°C or higher, and still more preferably 120°C or higher. The heating temperature is preferably 300°C or lower, more preferably 250°C or lower, and may be 200°C or lower, or 180°C or lower.

In a case where the compound serving as the modifying component is a silicon-containing compound, the heating temperature is, for example, preferably from 60 to 200°C, and more preferably from 100 to 180°C. Heating at 120°C or higher is also preferable. In a case where the compound serving as the modifying component is an aluminum-containing compound, the heating temperature is, for example, preferably from 60 to 300°C, and more preferably from 100 to 250°C. Heating at 120°C or higher is also preferable.

In addition, in the mixing step, mixing may be performed while heating, and thus the main heating step may be combined with the mixing step.

A heating time is not particularly limited, but is preferably from 15 minutes to 10 hours, and more preferably from 30 minutes to 2 hours, for example. The heating time is preferably 15 minutes or more, more preferably 30 minutes or more, and is preferably 10 hours or less, more preferably 2 hours or less.

The heating temperature in the mixing step is preferably from 60 to 300°C, and the heating time is preferably from 15 minutes to 10 hours.

An atmosphere during heating is not particularly limited, and may be air or an inert atmosphere. Examples of the inert atmosphere include a nitrogen atmosphere, an argon atmosphere, and a helium atmosphere.

Among these, in a case where the compound serving as the modifying component is a silicon-containing compound, the atmosphere during heating is preferably an inert atmosphere from the viewpoint of suppressing an oxidation reaction.

After the heating step, the carbon material may be cooled, washed again, and dried. By washing, it is possible to remove residues such as compounds that are not bonded to the carbon material raw material and become excess modifying components, and to suppress a decrease in battery capacity and an increase in battery resistance.

A known solution can be used for washing, and for example, the same solvent as that in the mixing step can be used.

A heating temperature during drying is usually a temperature of not lower than the boiling point and not higher than the autoignition point of the solvent, and is, for example, preferably from 20 to 150°C, more preferably from 40 to 100°C. The heating temperature is preferably 20°C or higher, more preferably 40°C or higher, and is preferably 150°C or lower, more preferably 100°C or lower. By sufficiently performing drying, it is possible to suppress a decrease in battery performance or the like due to the remaining of the solvent or the residue.

The drying may be performed under reduced pressure. A pressure in this case is, in terms of gauge pressure (difference from the atmosphere pressure), usually -0.1 MPa or more, preferably -0.08 MPa or more, and usually 0 MPa or less, preferably -0.03 MPa or less.

The produced carbon material may be subjected to powder processing such as pulverization, crushing, and classification treatment, as necessary.

An apparatus used for the pulverization and crushing is not particularly limited, and examples of a coarse pulverizer include a shearing mill, a jaw crusher, an impact crusher, and a cone crusher.

Examples of an intermediate pulverizer include a roll crusher and a hammer mill. Examples of a fine pulverizer include a ball mill, a vibration mill, a pin mill, a stirring mill, and a jet mill.

An apparatus used for the classification treatment is not particularly limited, and in the case of dry sieving, examples thereof include a rotary sieve, a shaking sieve, a gyratory sieve, and a vibrating sieve.

In the case of dry air flow classification, examples of the apparatus include a gravity classifier, an inertial force classifier, and a centrifugal force classifier (classifier, cyclone, or the like).

Further, wet sieving, a mechanical wet classifier, a hydraulic classifier, a sedimentation classifier, a centrifugal wet classifier, and the like can also be used.

Composition

For the second object, the composition according to the present embodiment preferably contains a compound (A) containing a polyoxyalkylene structure and a crosslinkable siloxane compound (B) containing a Q unit. The compound (A) more preferably has at least two crosslinkable silicon units per molecule.

Since the composition according to the present embodiment contains the compound (A) containing a polyoxyalkylene structure contributing to flexibility and the crosslinkable siloxane compound (B) containing a Q unit contributing to strength, the cured product produced from the composition is excellent in adhesion and durability.

Among them, the three dimensional siloxane structure containing a Q unit in the cured product produced from the composition can control penetration of water or an organic solvent into the cured product, and can suppress elution of components from the cured product or swelling of the cured product. In addition, since the crosslinkable siloxane compound (B) containing a Q unit can be cured at a low temperature, a cured product can be produced at a temperature lower than the thermal decomposition temperature of the compound (A) containing a polyoxyalkylene structure, and elution of components from the cured product due to thermal decomposition can be suppressed. Furthermore, since the polyoxyalkylene structure contributes to lithium ion conductivity, a secondary battery having excellent durability can be produced without impairing the charge-discharge efficiency by using the composition according to the present embodiment.

Compound (A)

The composition according to the present embodiment contains a compound (A) containing a polyoxyalkylene structure (hereinafter, sometimes referred to as "compound (A)"). Since the composition according to the present embodiment contains the compound (A), the cured product produced from the composition is excellent in adhesion, flexibility, and lithium ion conductivity.

Examples of the compound (A) include polyethylene glycol, polypropylene glycol, polybutylene glycol, polypentylene glycol, polyhexylene glycol, and copolymers thereof. One type of these compounds (A) may be used alone or two or more types thereof may be used in combination.

Among these compounds (A), polyethylene glycol and polypropylene glycol are preferable, and polyethylene glycol is more preferable, because of excellent solubility in various solvents. The compound (A) may be a diol type or a triol type.

The compound (A) may contain various functional groups other than the hydroxyl group, as long as the effects of the present invention are not impaired. The compound (A) preferably contains a crosslinkable silicon unit, because the compatibility and reactivity with the crosslinkable siloxane compound (B) are enhanced, and the durability of the cured product produced from the composition is improved. Specifically, the compound (A) is preferably a compound having at least one crosslinkable silicon unit per molecule, and more preferably a compound having two crosslinkable silicon units per molecule.

The crosslinkable silicon unit is preferably a D unit or a T unit because the compound (A) can react with the crosslinkable siloxane compound (B) containing a Q unit and the decomposition of the cured product due to elution can be suppressed, and more preferably a T unit because the number of crosslinking points is large and swelling can be suppressed along with elution.

In the present specification, a silicon unit bonded to one oxygen and three organic groups is referred to as an M unit, a silicon unit bonded to two oxygens and two organic groups is referred to as a D unit, a silicon unit bonded to three oxygens and one organic group is referred to as a T unit, and a silicon unit bonded to four oxygens is referred to as a Q unit.

When the crosslinkable siloxane compound (B) containing a Q unit contains a reactive organic group derived from a silane coupling agent, the compound (A) may have a reactive organic group that reacts with the reactive organic group of the crosslinkable siloxane compound (B) containing a Q unit.

Examples of the reactive organic group include a vinyl group, an amino group, an epoxy group, a methacryl group, a carboxyl group, an isocyanate group, and a hydrosilyl group.

A weight average molecular weight Mw of the compound (A) is preferably from 500 to 50000, and more preferably from 1000 to 2000. The weight average molecular weight is preferably 500 or more, and more preferably 1000 or more, because the nonvolatility is excellent and the solubility in water or an organic solvent is not too high. In addition, the weight average molecular weight is preferably 50000 or less, and more preferably 20000 or less, because deposition and crystallization in the composition are less likely to occur, and the stability of the composition and the compatibility with the crosslinkable siloxane compound (B) containing a Q unit are excellent.

In the present specification, the weight average molecular weight Mw is a value as measured by a gel filtration chromatography method.

Compound (B)

The composition according to the present embodiment contains a crosslinkable siloxane compound (B) containing a Q unit (hereinafter, sometimes referred to as "compound (B)"). The composition according to the present embodiment contains the compound (B), and thus the elution rate and swelling rate of the cured product produced from the composition in water or organic solvent can be reduced, and the durability is excellent.

Examples of the raw material for the compound (B) include tetramethoxysilane, tetraethoxysilane, tetrapropoxysilane, tetrabutoxysilane, partially hydrolyzed oligomers of the tetraalkoxysilanes as described above, and modified oligomers having two or more alkoxy groups. One type of these raw materials for the compounds (B) may be used alone or two or more types thereof may be used in combination.

Among these raw materials for the compound (B), a partially hydrolyzed oligomer of a tetraalkoxysilane is preferable, and a partially hydrolyzed oligomer of tetramethoxysilane is more preferable, because of excellent curability.

The partially hydrolyzed oligomer of a tetraalkoxysilane is preferably a dimer to a 200-mer, more preferably a dimer to a 100-mer, and still more preferably a dimer to a 10-mer, because the compatibility with the compound (A) is excellent and the storage stability of the composition is excellent.

The compound (B) can be produced by hydrolyzing the above-described raw material for the compound (B).

The raw material for the compound (B) may be used in combination with a silane coupling agent or an alkoxysilane having a non-reactive organic group for the purpose of enhancing the compatibility with the compound (A).

Compound (C)

The composition according to the present embodiment may further contain a boron-containing compound (C) (hereinafter, sometimes referred to as "compound (C)") in addition to the compound (A) and the compound (B). The composition according to the present embodiment further contains the compound (C) and thus can reduce the resistance, and is excellent in suppressing side reactions in a battery of the carbon material containing the cured product produced from the composition (sometimes referred to as "cured product-containing carbon material").

The compound (C) has high solubility in water or organic solvent when used alone, but when used in combination with the compound (A) and the compound (B), the hydroxyl group bonded to boron reacts with the hydroxyl group or silanol group of the compound (A) or the silanol group of the compound (B), and elution from the cured product is suppressed.

Examples of the compound (C) include boric acid, boron oxide, metaboric acid, tetraboric acid, borates, alkoxides having from 1 to 3 carbon atoms bonded to boron, lithium borates, and organic boronic acids. One type of these compounds (C) may be used alone or two or more types thereof may be used in combination. Among these compounds (C), boric acid, boron oxide, and organic boronic acid are preferable, and boric acid and phenylboronic acid are more preferable, because of their excellent stability. As the organic boronic acid, an aromatic boronic acid is more preferable.

Solvent

The composition according to the present embodiment may further contain a solvent in addition to the compound (A) and the compound (B). In addition to the compound (A) and the compound (B), the compound (C) and a solvent may be further contained. The composition according to the present embodiment contains a solvent, and thus has excellent handleability as a coating material of the composition.

Examples of the solvent include water, methanol, ethanol, propanol, isopropanol, butanol, acetonitrile, acetone, and tetrahydrofuran. One type of these solvents may be used alone or two or more types thereof may be used in combination.

Among these solvents, water, methanol, ethanol, and isopropanol are preferable, and methanol and ethanol are more preferable, because the productivity when producing a cured product from the composition is excellent, the solubility of the compound (A) containing a polyoxyalkylene structure is large, and the storage stability of the composition is excellent.

The composition according to the present embodiment may further contain an additional component in addition to the compound (A), the compound (B), the compound (C), and the solvent, as long as the effects of the present invention are not impaired.

Formulation of Composition

A content proportion of the compound (A) in the composition according to the present embodiment is preferably from 10 to 90 mass%, and more preferably from 20 to 80 mass%. The content proportion is preferably 10 mass% or more, and more preferably 20 mass% or more, because the cured product produced from the composition is excellent in flexibility and lithium ion conductivity. In addition, the content proportion is preferably 90 mass% or less, and more preferably 80 mass% or less, because the cured product produced from the composition is excellent in durability.

The content proportion of the compound (A) in the composition is a content proportion per 100 mass% of a total of the compound (A), the compound (B), the compound (C), and additional components.

A content proportion of the compound (B) in the composition according to the present embodiment is preferably from 10 to 90 mass%, and more preferably from 20 to 80 mass%. The content proportion is preferably 10 mass% or more, and more preferably 20 mass% or more, because the cured product produced from the composition is excellent in durability. In addition, the content proportion is preferably 90 mass% or less, and more preferably 80 mass% or less, because the cured product produced from the composition is excellent in flexibility.

The content proportion of the compound (B) in the composition is a content proportion per 100 mass% of the total of the compound (A), the compound (B), the compound (C), and additional components.

A mass ratio of the compound (B) to the compound (A) (mass of compound (B)/mass of compound (A)) is preferably from 0.2 to 5, and more preferably from 0.3 to 3. The mass ratio is preferably 0.2 or more, and more preferably 0.3 or more, because the cured product produced from the composition is excellent in durability. In addition, the mass ratio is preferably 5 or less, and more preferably 3 or less, because the cured product produced from the composition is excellent in flexibility.

In a case where the compound (C) is used, a content proportion of the compound (C) in the composition according to the present embodiment is preferably from 0.1 to 30 mass%, and more preferably from 0.3 to 20 mass%. The content proportion is preferably 0.1 mass% or more, and more preferably 0.3 mass% or more, because the composition is excellent in suppressing side reactions in a battery of the carbon material containing the cured product produced from the composition. In addition, the content proportion is preferably 30 mass% or less, and more preferably 20 mass% or less, because the cured product produced from the composition is excellent in durability. A content of the compound (C) is preferably lower than the content of at least one of the compound (A) or the compound (B), and more preferably lower than the lower of the contents of the compound (A) and the compound (B).

The content proportion of the compound (C) in the composition is a content proportion per 100 mass% of the total of the compound (A), the compound (B), the compound (C), and additional components.

A total content proportion of the additional components in the composition according to the present embodiment is preferably 20 mass% or less, and more preferably 10 mass% or less, and may be 0 mass%, that is, the additional components may not be contained.

The total content proportion of the additional components in the composition is a content proportion per 100 mass% of the total of the compound (A), the compound (B), the compound (C), and additional components.

In a case where the solvent is used, a content of the solvent per 100 parts by mass of the composition according to the exemplary embodiment is preferably from 5 to 99.9 parts by mass and more preferably from 10 to 99.5 parts by mass. The content is preferably 5 parts by mass or more, and more preferably 10 parts by mass or more, because a uniform cured product is produced from the composition. In addition, the content is preferably 99.9 parts by mass or less, and more preferably 99.5 parts by mass or less, because the productivity in producing a cured product from the composition is excellent.

The content of the solvent is a content per 100 parts by mass of the total of the compound (A), the compound (B), the compound (C), and additional components.

A content proportion of the polyoxyalkylene structure in the composition according to the present embodiment is preferably from 10 to 60 mass%, and more preferably from 15 to 50 mass%. The content proportion is preferably 10 mass% or more, and more preferably 15 mass% or more, because the cured product produced from the composition is excellent in flexibility and lithium ion conductivity. In addition, the content proportion is preferably 60 mass% or less, and more preferably 50 mass% or less, because the cured product produced from the composition is excellent in durability. The polyoxyalkylene structure is a polyoxyalkylene structure constituting the compound (A) containing a polyoxyalkylene structure.

The content proportion of the polyoxyalkylene structure in the composition is a content proportion per 100 mass% of the total of the compound (A), the compound (B), the compound (C), and additional components.

A total content proportion of the Q units in the composition according to the present embodiment is preferably 10 mass% or more, and more preferably 15 mass% or more, because the cured product produced from the composition is excellent in durability, and is preferably 50 mass% or less, and more preferably 40 mass% or less, because the cured product produced from the composition is excellent in flexibility and does not inhibit lithium ion conductivity. The above Q unit is a Q unit constituting the crosslinkable siloxane compound (B) containing a Q unit.

The total content proportion of the Q units in the composition is a content proportion per 100 mass% of the total of the compound (A), the compound (B), and the compound (C).

Thermosetting Composition

The composition according to the present embodiment is not particularly limited as long as it can be cured, but a thermosetting composition is preferable because the productivity of a cured product produced from the composition is excellent and elution and swelling can be suppressed.

A heating temperature during curing of the thermosetting composition is preferably from 80 to 200°C, and more preferably from 100 to 180°C. The heating temperature is preferably 80°C or higher, and more preferably 100°C or higher, because the productivity of the cured product produced from the composition is excellent. In order to prevent deterioration of the cured product produced from the composition, the heating temperature is preferably 200°C or lower, and more preferably 180°C or lower.

Cured Product

The cured product according to the present embodiment preferably contains: a polyoxyalkylene structure; and a three dimensional siloxane structure containing a Q unit, and more preferably has a swelling rate in ethyl methyl carbonate of 70 mass% or less.

The cured product according to the present embodiment has excellent flexibility and durability because it contains a flexible polyoxyalkylene structure and a three dimensional siloxane structure containing a high-strength Q unit. Among them, the three dimensional siloxane structure containing a Q unit in the cured product can control penetration of water or an organic solvent into the cured product, and can suppress elution of components from the cured product or swelling of the cured product.

Specifically, the cured product according to the present embodiment is produced by curing the composition described in the Composition above, and preferred embodiments are also the same. That is, the method for manufacturing a cured product according to the present embodiment includes curing the composition described in the above Composition, and the step of curing is preferably a step of heating.

A method for curing the composition to produce a cured product is not particularly limited, but it is preferable to cure the composition by heating because of excellent productivity.

A heating temperature is preferably from 80 to 200°C, and more preferably from 100 to 180°C. The heating temperature is preferably 80°C or higher, and more preferably 100°C or higher, because of excellent productivity. In order to prevent deterioration in the production process, the heating temperature is preferably 200°C or lower, and more preferably 180°C or lower.

A heating atmosphere is preferably an inert gas atmosphere, because decomposition of the polyoxyalkylene structure is suppressed.

A content proportion of a solid content derived from the compound (A) in the cured product according to the present embodiment is preferably from 10 to 90 mass%, and more preferably from 20 to 80 mass%. The content proportion is preferably 10 mass% or more, and more preferably 20 mass% or more, because the cured product is excellent in flexibility. In addition, the content proportion is preferably 90 mass% or less, and more preferably 80 mass% or less, because the cured product is excellent in durability.

The content proportion of the solid content derived from the compound (A) in the cured product is a content proportion per 100 mass% of the cured product.

A content proportion of a solid content derived from the compound (B) in the cured product is preferably from 10 to 90 mass%, and more preferably from 20 to 80 mass%. The content proportion is preferably 10 mass% or more, and more preferably 20 mass% or more, because the cured product is excellent in durability. In addition, the content proportion is preferably 90 mass% or less, and more preferably 80 mass% or less, because the cured product is excellent in flexibility.

The content proportion of the solid content derived from the compound (B) in the cured product is a content proportion per 100 mass% of the cured product.

A mass ratio of the solid content derived from the compound (B) in the cured product to the solid content derived from the compound (A) in the cured product (mass of compound (B)/mass of compound (A)) is preferably from 0.2 to 5, and more preferably from 0.3 to 3. The mass ratio is preferably 0.2 or more, and more preferably 0.3 or more, because the cured product is excellent in durability. In addition, the mass ratio is preferably 5 or less, and more preferably 3 or less, because the cured product is excellent in flexibility.

In a case where the compound (C) is used, a content proportion of a solid content derived from the compound (C) in the cured product according to the present embodiment is preferably from 0.1 to 30 mass%, and more preferably from 0.3 to 20 mass%. The content proportion is preferably 0.1 mass% or more, and more preferably 0.3 mass% or more, because the composition is excellent in suppressing side reactions in a battery of the carbon material containing the cured product. In addition, the content proportion is preferably 30 mass% or less, and more preferably 20 mass% or less, because the cured product is excellent in durability.

The content proportion of the solid content derived from the compound (C) in the cured product is a content proportion per 100 mass% of the cured product.

A total content proportion of solid contents derived from the additional components in the cured product according to the present embodiment is preferably 20 mass% or less, and more preferably 10 mass% or less, and may be 0 mass%, that is, the additional components need not be contained.

The total content proportion of the solid contents derived from the additional components in the cured product is a content proportion per 100 mass% of the cured product.

A content proportion of the polyoxyalkylene structure in the cured product according to the present embodiment is preferably from 20 to 80 mass%, and more preferably from 30 to 70 mass%. The content proportion is preferably 20 mass% or more, and more preferably 30 mass% or more, because the cured product is excellent in flexibility and lithium ion conductivity. In addition, the content proportion is preferably 80 mass% or less, and more preferably 70 mass% or less, because the cured product is excellent in durability.

The content proportion of the polyoxyalkylene structure in the cured product is a content proportion per 100 mass% of the cured product.

A content proportion of silicon atoms in the cured product according to the present embodiment is preferably from 10 to 40 mass%, and more preferably from 15 to 30 mass%. The content proportion is preferably 10 mass% or more, more preferably 15 mass% or more, because the cured product is excellent in durability. In addition, the content proportion is preferably 40 mass% or less, and more preferably 30 mass% or less, because the cured product is excellent in flexibility and the lithium ion conductivity is not inhibited.

The content proportion of the silicon element in the cured product is a content proportion per 100 mass% of the cured product.

A total content proportion of the Q units in the cured product according to the present embodiment is preferably from 20 to 60 mass%, and more preferably from 30 to 50 mass%. The total content proportion is preferably 20 mass% or more, and more preferably 30 mass% or more, because the cured product is excellent in durability. In addition, the total content proportion is preferably 60 mass% or less, and more preferably 50 mass% or less, because the cured product is excellent in flexibility.

The total content proportion of the Q units in the cured product is a content proportion per 100 mass% of the cured product.

The swelling rate of the cured product according to the present embodiment with ethyl methyl carbonate is preferably less than 70 mass%, more preferably 60 mass% or less, and still more preferably 50 mass% or less, the lower the better, but the swelling rate is, for example, 1 mass% or more.

The swelling rate means a swelling rate after the cured product is immersed in ethyl methyl carbonate at 23°C for 1 hour. The swelling rate can be calculated from a relative value of a change in mass due to immersion for 1 hour with respect to the mass before immersion.

The cured product according to the present embodiment is preferably hydrolyzable, and more preferably produces, after hydrolysis, a polyoxyalkylene structure and a fragment having at least two silicon atoms per molecule. From the viewpoint of controlling the three dimensional structure of the polymer, a proportion of the polyoxyalkylene structure and the fragment having at least two silicon atoms per 100 mol% of fragments having an Si atom is preferably 10 mol% or more, more preferably 30 mol% or more, still more preferably 50 mol% or more, still more preferably from 50 to 100 mol%, and yet still more preferably from 50 to 70 mol%.

The above proportion means a proportion when the hydrolysis is performed under the conditions that the Si-O bond of the cured product can be hydrolyzed and that the polyoxyalkylene structure is not hydrolyzed. The proportion can be measured by NMR.

Cured Product-Containing Carbon Material

The cured product-containing carbon material according to the present embodiment contains a cured product and a carbon material. Here, as the cured product, those described in the above Cured Product can be used, and a preferred embodiment thereof is also the same. The carbon material will be described later.

The cured product-containing carbon material according to the present embodiment is excellent in suppressing side reactions in a battery because the cured product having a low elution rates and swelling rates in water and organic solvent protects the carbon material. Therefore, in the present embodiment, the cured product-containing carbon material can be suitably used as a negative electrode active material.

In particular, the cured product-containing carbon material of the present invention contains a polyoxyalkylene structure having lithium ion conductivity, and is characterized in that the cured product has a low resistance. The three dimensional siloxane structure containing no Q unit cannot suppress swelling of the cured product, and in the long term, the component containing the polyoxyalkylene structure is eluted from the cured product and the cured product has a sparse structure, and thus the performance as protection of the carbon material cannot be maintained.

On the other hand, since the cured product-containing carbon material according to the present embodiment contains a three dimensional siloxane structure containing a Q unit, the compatibility and uniformity in the cured product are controlled, swelling and elution are suppressed, and the structure of the cured product is maintained, and therefore, side reactions in a battery can be suppressed over a long period of time.

The cured product-containing carbon material according to the present embodiment is produced by curing the composition described in the above Composition in the presence of a carbon material.

A method for curing the composition is not particularly limited, but heating is preferred because of excellent productivity. That is, an aspect of the method for manufacturing a cured product-containing carbon material according to the present embodiment includes heating the composition described in the above Composition in the presence of a carbon material. The resulting cured product-containing carbon material is preferably used as a negative electrode active material.

A heating temperature in the step of heating is preferably from 80 to 200°C, and more preferably from 100 to 180°C. The heating temperature is preferably 80°C or higher, and more preferably 100°C or higher, because of excellent productivity. In order to prevent deterioration of the cured product, the heating temperature is preferably 200°C or lower, and more preferably 180°C or lower.

A heating atmosphere in the step of heating is preferably an inert gas atmosphere, because decomposition of the polyoxyalkylene structure is suppressed.

Carbon Material

The carbon material constituting the cured product-containing carbon material according to the present embodiment is not particularly limited. For example, those described in the above Carbon Material can be adopted, and preferred embodiments are also the same. That is, in an aspect of the carbon material in the present embodiment, a modifying component binds to the carbon material raw material, and the modifying component preferably contains at least one element selected from the group consisting of boron, aluminum, silicon, phosphorus, sulfur, and germanium.

The d002 value of the carbon material in the present embodiment is preferably 3.360 Å or less, and more preferably 3.357 Å or less because the more highly crystalline the graphite is, the more excellent the compressibility during pressing is and the carbon material has a sufficient charge-discharge capacity.

Lc of the carbon material in the present embodiment is preferably 900 Å or more, and more preferably 1000 Å or more because the more highly crystalline the graphite is, the more excellent the compressibility during pressing is and the carbon material has a sufficient charge-discharge capacity.

In the present specification, the d002 value is a value of an interplanar spacing of a lattice plane (002 plane) measured by X-ray diffractometry in accordance with a method of the Japan Society for the Promotion of Science, and Lc is a value of a size of a crystallite measured by X-ray diffractometry in accordance with the method of the Japan Society for the Promotion of Science. The measurement conditions of X-ray diffractometry are as follows.

Sample: a sample prepared by mixing a measurement target with X-ray standard high purity silicon powder in an amount of about 15 mass% relative to the total amount

X-ray: CuK$\alpha$ ray
Measurement range: $20° \leq 2\theta \leq 30°$
Step angle: 0.013°

Sample preparation: a sample plate recess having a depth of 0.2 mm is filled with a powder sample to prepare a flat sample surface

The volume-based average particle size (d50) of the carbon material in the present embodiment is preferably from 1 to 50 $\mu$m, and more preferably from 10 to 30 $\mu$m. In order to prevent an increase in irreversible capacity and a loss of initial battery capacity, the volume-based average particle size (d50) is preferably 1 $\mu$m or more, more preferably 4 $\mu$m or more, and still more preferably 10 $\mu$m or more. In addition, the volume-based average particle size (d50) is preferably 50

μm or less, more preferably 30 μm or less, and still more preferably 25 μm or less, because process defects such as streaking at the time of electrode plate formation can be suppressed, and rapid charge-discharge characteristics and low-temperature input-output characteristics are excellent.

In the present specification, the volume-based average particle size (d50) is a value of a volume-based median size measured by a laser diffraction/scattering particle size distribution analyzer.

Specifically, 0.01 g of a sample is suspended in 10 mL of a 0.2 mass% aqueous solution of polyoxyethylene sorbitan monolaurate as a surfactant, the suspension is introduced into a laser diffraction/scattering particle size distribution analyzer and irradiated with ultrasonic waves of 28 kHz at an output power of 60 W for 1 minute, and then a volume-based median size in the measuring apparatus is measured.

The specific surface area (SA) of the carbon material in the present embodiment is preferably from 3.0 to 11.0 m$^2$/g, more preferably from 4.0 to 9.0 m$^2$/g, and still more preferably from 5.0 to 8.0 m$^2$/g. The specific surface area is preferably 3.0 m$^2$/g or more, more preferably 4.0 m$^2$/g or more, and still more preferably 5.0 m$^2$/g or more, because a portion where lithium ions enter and exit is secured, and rapid charge-discharge characteristics and low-temperature input-output characteristics are excellent. In addition, the specific surface area is preferably 11.0 m$^2$/g or less, more preferably 9.0 m$^2$/g or less, and still more preferably 8.0 m$^2$/g or less, because side reactions with the electrolytic liquid are suppressed, a decrease in the initial charge-discharge efficiency and an increase in the amount of gas generated are prevented, and the battery capacity is improved.

In the present specification, the specific surface area (SA) is a value as measured by a BET method.

Specifically, the measurement is performed as follows: in a specific surface area measuring apparatus, a sample is subjected to preliminary drying at 350°C under reduced pressure for 15 minutes under a nitrogen gas flow; then the sample is cooled to a liquid nitrogen temperature; and the specific surface area of the sample is measured according to a nitrogen adsorption single-point BET method based on a gas flow method, using a nitrogen-helium mixed gas, whose relative pressure of nitrogen to the atmospheric pressure is accurately adjusted to 0.3.

The tap density of the carbon material in the present embodiment is preferably from 0.70 to 1.30 g/cm$^3$, more preferably from 0.80 to 1.20 g/cm$^3$, and still more preferably from 0.90 to 1.10 g/cm$^3$. The tap density is preferably 0.70 g/cm$^3$ or more, more preferably 0.80 g/cm$^3$ or more, and still more preferably 0.90 g/cm$^3$ or more because process defects such as streaking at the time of electrode plate formation can be suppressed, a negative electrode sheet having good rollability and a high density is easily formed due to increased fillability, a tortuosity factor of a migration path of lithium ions is small when the carbon material is formed into an electrode body, and transfer of the electrolytic liquid becomes smooth due to aligned forms of voids between particles to improve rapid charge-discharge characteristics. In addition, the tap density is preferably 1.30 g/cm$^3$ or less, more preferably 1.20 g/cm$^3$ or less, and still more preferably 1.10 g/cm$^3$ or less, because the particles have appropriate spaces at the surfaces and inside thereof, and thus the particles are not too hard and have excellent electrode-pressing properties, and rapid charge-discharge characteristics and low-temperature input-output characteristics are excellent.

In the present invention, the tap density is a density calculated from the volume and mass of a sample when the sample is dropped, through a sieve with a mesh size of 300 μm, into a cylindrical tap cell having a diameter of 1.6 cm and a volumetric capacity of 20 cm$^3$ to fill the cell to a full capacity and then tapping is performed 1000 times with a stroke length of 10 mm, by using a powder density measuring device.

A circularity of the carbon material in the present embodiment is preferably from 0.88 to 0.99, more preferably from 0.90 to 0.98, and still more preferably from 0.92 to 0.97. The circularity is preferably 0.88 or more, more preferably 0.90 or more, and still more preferably 0.92 or more because the tortuosity factor of lithium ion diffusion decreases, migration of the electrolytic liquid into voids between particles becomes smooth, and excellent rapid charge-discharge characteristics are achieved. In addition, the circularity is preferably 0.99 or less, more preferably 0.98 or less, and still more preferably 0.97 or less because the contact between the carbon materials can be secured and excellent cycle characteristics are achieved.

In the present specification, the circularity is calculated from Equation (I) below by measuring a particle size distribution of an equivalent circle diameter by flow particle image analysis.

Specifically, ion-exchanged water is used as a dispersion medium, polyoxyethylene sorbitan monolaurate is used as a surfactant, and ultrasonic dispersion is performed to prepare a dispersion liquid. Thereafter, the images of particle shapes are captured using a flow image analyzer. From captured images of at least 1000 or more particles, the values of circularity are averaged for the particles having an equivalent circle diameter in a range of 1.5 μm to 40 μm. This average value is defined as the circularity.

[Circularity] = [perimeter of equivalent circle having same area as projected shape of particle]/[actual perimeter of projected shape of particle] (I)

A cumulative pore volume of the carbon material in the present embodiment is preferably from 0.030 to 0.120 mL/g, more preferably from 0.040 to 0.090 mL/g, and still more preferably from 0.050 to 0.070 mL/g. The cumulative pore volume is preferably 0.030 mL/g or more, more preferably 0.040 mL/g or more, and still more preferably 0.050 mL/g or more, and is preferably 0.120 mL/g or less, more preferably 0.090 mL/g or less, and still more preferably 0.070 mL/g or less, because the carbon material is easily deformed to an appropriate degree at the time of pressing.

In the present specification, the cumulative pore volume is measured by the mercury intrusion method.

Specifically, a sample is weighed to have a value of about 0.2 g using a mercury porosimeter, sealed in a cell for powder, and pretreated by degassing at 25°C and 50 $\mu$mHg or less for 10 minutes. Subsequently, the cell is depressurized to 4 psia, mercury is introduced into the cell, and the cell is pressurized in a stepwise manner from 4 psia to 40000 psia, and then depressurized to 25 psia. The number of steps at the time of pressurization is 80 or more, and in each step, the amount of mercury intruded is measured after an equilibrium time of 10 seconds. From the resultant mercury intrusion curve, a pore distribution is calculated using a Washburn equation. The pore distribution is calculated using a surface tension ($\gamma$) and a contact angle ($\psi$) of mercury as 485 dyne/cm and 140°, respectively. From the obtained results, a graph is created with the pore size on the horizontal axis and the pore volume on the vertical axis, and the cumulative pore volume (mL/g) is calculated.

Method for Manufacturing Carbon Material

As the carbon material in the present embodiment, a commercially available product may be used as it is, or a commercially available raw material for a carbon material may be processed and used, but it is preferable to use scale-spheroidized natural graphite because it is highly crystalline and excellent in compressibility.

When the carbon material described in the above Carbon Material is used as the carbon material, the carbon material can be produced by the method described in the above Method for Manufacturing Carbon Material.

The raw material for the carbon material in the present embodiment is preferably graphite, more preferably natural graphite or artificial graphite because of high crystallinity and excellent capacity, and still more preferably natural graphite because of higher crystallinity, more excellent capacity, and no need for heat treatment during manufacture. The graphite preferably contains a small amount of impurities, and the graphite is preferably subjected to a purification treatment as necessary.

Examples of the natural graphite include amorphous graphite, scale-like graphite, and scaly graphite. Among these natural graphites, scale-like graphite or scaly graphite is preferred, and scaly graphite is more preferred, because of having a high degree of graphitization and a small amount of impurities.

Examples of the artificial graphite include those produced by graphitizing an organic substance such as coal tar pitch, coal-based heavy oil, reduced crude, petroleum-based heavy oil, aromatic hydrocarbon, nitrogen-containing cyclic compound, sulfur-containing cyclic compound, polyphenylene, polyvinyl chloride, polyvinyl alcohol, polyacrylonitrile, polyvinyl butyral, natural polymer, polyphenylene sulfide, polyphenylene oxide, furfuryl alcohol resin, phenol-formaldehyde resin, or imide resin by heating at 2500°C or higher.

The method of spheroidization treatment is preferably a method in which a mechanical energy is applied for the spheroidization treatment because the shape of particles is easily controlled.

Examples of the mechanical energy include impact, compression, friction, and shear force. One type of these mechanical energies may be used alone or two or more thereof may be used in combination.

In the method of spheroidization treatment by application of a mechanical energy, an apparatus for applying a mechanical energy only need be used.

Physical Properties of Cured Product-Containing Carbon Material

A content proportion of the carbon material in the cured product-containing carbon material according to the present embodiment is preferably from 95 to 99.9 mass%, and more preferably from 98 to 99.7 mass%. The content proportion is preferably 95 mass% or more, and more preferably 98 mass% or more per 100 mass% of the cured product-containing carbon material, because excellent capacity as a negative electrode material is achieved. In addition, the content proportion is preferably 99.9 mass% or less, and more preferably 99.7 mass% or less, because the volume change in the battery is excellently suppressed.

A content proportion of the cured product in the cured product-containing carbon material according to the present embodiment is preferably from 0.3 to 5 mass%, and more preferably from 0.5 to 3 mass%. The content proportion is preferably 0.3 mass% or more, and more preferably 0.5 mass% or more, per 100 mass% of the cured product-containing carbon material, because side reactions in a battery are excellently suppressed. The content proportion is preferably 5 mass% or less, and more preferably 3 mass% or less, because the resistance of the battery is excellently suppressed.

A content proportion of the polyoxyalkylene structure in the cured product-containing carbon material according to the present embodiment is preferably from 0.05 to 3 mass%, and more preferably from 0.1 to 1.5 mass%. The content proportion is preferably 0.05 mass% or more, and more preferably 0.1 mass% or more, because excellent adhesion between the cured product and the carbon material and excellent lithium ion conductivity are achieved. The content proportion is preferably 3 mass% or less, and more preferably 1.5 mass% or less, because side reactions in a battery are excellently suppressed.

The content proportion of the polyoxyalkylene structure in the cured product-containing carbon material is a content proportion per 100 mass% of the cured product-containing carbon material.

A content proportion of the silicon element in the cured product-containing carbon material according to the present embodiment is preferably from 0.03 to 2 mass%, and more preferably from 0.05 to 1 mass%. The content proportion is preferably 0.03 mass% or more, and more preferably 0.05 mass% or more, because the cured product is excellent in durability. In addition, the content proportion is preferably 2 mass% or less, and more preferably 1 mass% or less, because excellent adhesion between the cured product and the carbon material is achieved.

The content proportion of the silicon element in the cured product-containing carbon material is a content proportion per 100 mass% of the cured product-containing carbon material.

A total content proportion of the Q units in the cured product-containing carbon material according to the present embodiment is preferably from 0.05 to 2.5 mass%, and more preferably from 0.1 to 2 mass%. The total content proportion is preferably 0.05 mass% or more, and more preferably 0.1 mass% or more, because excellent adhesion between the cured product and the carbon material is achieved. In addition, the total content proportion is preferably 2.5 mass% or less, and more preferably 2 mass% or less, because removal due to shrinkage of the cured product in the production process is suppressed.

The total content proportion of the Q units in the cured product-containing carbon material is a content proportion per 100 mass% of the cured product-containing carbon material.

The d002 value of the cured product-containing carbon material in the present embodiment is preferably 3.360 Å or less, and more preferably 3.357 Å or less because the more highly crystalline the graphite is, the more excellent the compressibility during pressing is and the carbon material has a sufficient charge-discharge capacity.

Lc of the cured product-containing carbon material according to the present embodiment is preferably 900 Å or more, and more preferably 1000 Å or more because the more highly crystalline the graphite is, the more excellent the compressibility during pressing is and the carbon material has a sufficient charge-discharge capacity.

A volume-based average particle size (d50) of the cured product-containing carbon material according to the present embodiment is preferably from 1 to 50 $\mu$m, more preferably from 4 to 30 $\mu$m, and still more preferably from 10 to 25 $\mu$m. In order to prevent an increase in irreversible capacity and a loss of initial battery capacity, the volume-based average particle size (d50) is preferably 1 $\mu$m or more, more preferably 4 $\mu$m or more, and still more preferably 10 $\mu$m or more. In addition, the volume-based average particle size (d50) is preferably 50 $\mu$m or less, more preferably 30 $\mu$m or less, and still more preferably 25 $\mu$m or less, because process defects such as streaking at the time of electrode plate formation can be suppressed, and rapid charge-discharge characteristics and low-temperature input-output characteristics are excellent.

The specific surface area (SA) of the cured product-containing carbon material according to the present embodiment is preferably from 3.0 to 11.0 m$^2$/g, more preferably from 4.0 to 9.0 m$^2$/g, and still more preferably from 5.0 to 8.0 m$^2$/g. The specific surface area is preferably 3.0 m$^2$/g or more, more preferably 4.0 m$^2$/g or more, and still more preferably 5.0 m$^2$/g or more, because a portion where lithium ions enter and exit is secured, and rapid charge-discharge characteristics and low-temperature input-output characteristics are excellent. In addition, the specific surface area is preferably 11.0 m$^2$/g or less, more preferably 9.0 m$^2$/g or less, and still more preferably 8.0 m$^2$/g or less, because side reactions with the electrolytic liquid are suppressed, a decrease in the initial charge-discharge efficiency and an increase in the amount of gas generated are prevented, and the battery capacity is improved.

The tap density of the cured product-containing carbon material according to the present embodiment is preferably from 0.70 to 1.30 g/cm$^3$, more preferably from 0.80 to 1.20 g/cm$^3$, and still more preferably from 0.90 to 1.10 g/cm$^3$. The tap density is preferably 0.70 g/cm$^3$ or more, more preferably 0.80 g/cm$^3$ or more, and still more preferably 0.90 g/cm$^3$ or more because process defects such as streaking at the time of electrode plate formation can be suppressed, a negative electrode sheet having good rollability and a high density is easily formed due to increased fillability, a tortuosity factor of a migration path of lithium ions is small when the carbon material is formed into an electrode body, and transfer of the electrolytic liquid becomes smooth due to aligned forms of voids between particles to improve rapid charge-discharge characteristics. In addition, the tap density is preferably 1.30 g/cm$^3$ or less, more preferably 1.20 g/cm$^3$ or less, and still more preferably 1.10 g/cm$^3$ or less, because the particles have appropriate spaces at the surfaces and inside thereof, and thus the particles are not too hard and have excellent electrode-pressing properties, and rapid charge-discharge characteristics and low-temperature input-output characteristics are excellent.

A circularity of the cured product-containing carbon material according to the present embodiment is preferably from 0.88 to 0.99, more preferably from 0.90 to 0.98, and still more preferably from 0.92 to 0.97. The circularity is preferably 0.88 or more, more preferably 0.90 or more, and still more preferably 0.92 or more because the tortuosity factor of lithium ion diffusion decreases, migration of the electrolytic liquid into voids between particles becomes smooth, and excellent rapid charge-discharge characteristics are achieved. In addition, the circularity is preferably 0.99 or less, more preferably 0.98 or less, and still more preferably 0.97 or less because the contact between the carbon materials can be secured and excellent cycle characteristics are achieved.

A cumulative pore volume of the cured product-containing carbon material according to the present embodiment is preferably from 0.030 to 0.120 mL/g, more preferably from 0.040 to 0.090 mL/g, and still more preferably from 0.050 to 0.070 mL/g. The cumulative pore volume is preferably 0.030 mL/g or more, more preferably 0.040 mL/g or more, and still more preferably 0.050 mL/g or more, and is preferably 0.120 mL/g or less, more preferably 0.090 mL/g or less, and still more preferably 0.070 mL/g or less, because the carbon material is easily deformed to an appropriate degree at the time of pressing.

Negative Electrode

The negative electrode according to the present embodiment includes a current collector and a negative electrode active material layer formed on the current collector. The negative electrode active material layer contains at least one carbon material of the carbon material described in the above Carbon Material or the carbon material described in the above Cured Product-Containing Carbon Material.

A content proportion of the carbon material in the negative electrode active material layer is preferably from 80 to 99.8 mass%, more preferably from 90 to 99.8 mass%, and still more preferably from 99 to 99.7 mass%. From the viewpoint of suppressing a decrease in battery capacity, the content proportion is preferably 80 mass% or more, more preferably 90 mass% or more, and still more preferably 99 mass% or more, and is preferably 99.8 mass% or less, and more preferably 99.7 mass% or less.

The negative electrode active material layer may contain a conductive auxiliary agent, a binder, a thickener, a dispersant, and the like in addition to the carbon material according to the present embodiment.

As the conductive auxiliary agent, a known conductive auxiliary agent can be used, for example, an additional carbon material other than the carbon material according to the present embodiment. Examples of the additional carbon material include graphite, and particles produced by coating graphite with amorphous carbon and/or a graphitic substance having a small degree of graphitization. The additional carbon material may further contain an oxide or another metal. Examples of the other metal include metals capable of being alloyed with Li, such as Sn, Si, Al, and Bi.

Examples of the conductive auxiliary agent include silicone and carbon black in addition to the above.

One type of the conductive auxiliary agents may be used alone or two or more types thereof may be used in combination.

As the binder, a known binder can be used, and examples thereof include styrene-butadiene rubber (SBR) as an aqueous binder.

As the thickener and the dispersant, known ones can be used, and examples thereof include carboxymethyl cellulose (CMC).

The negative electrode can be manufactured by forming a negative electrode active material layer on a current collector by using the carbon material according to the present embodiment. That is, an aspect of the method for manufacturing a negative electrode according to the present embodiment includes forming a negative electrode active material layer using the carbon material described in the above Carbon Material to produce a negative electrode. Here, a preferred aspect of the carbon material is the same as the preferred aspect of the carbon material described in the above Carbon Material.

In addition, an aspect of the method for manufacturing a negative electrode according to the present embodiment includes forming a negative electrode active material layer using the cured product-containing carbon material described in the above Cured Product-Containing Carbon Material to produce a negative electrode. Here, a preferred aspect of the cured product-containing carbon material is the same as the preferred aspect of the cured product-containing carbon material described in the above Cured Product-Containing Carbon Material.

For example, the negative electrode active material layer is formed by dispersing the carbon material in a dispersion medium together with a conductive auxiliary agent, a binder, a thickener, and the like as desired to prepare a slurry, and applying the resulting slurry onto a current collector.

Among them, a method of applying a slurry prepared by blending the carbon material or the cured product-containing carbon material with a binder onto a current collector and drying the slurry is preferable because of being inexpensive and excellent in productivity. The slurry may further contain a thickener.

Preferably, a slurry prepared by blending the carbon material or the cured product-containing carbon material and a binder resin is applied onto the current collector and dried, and then the resulting product is pressed to increase the density of the active material layer formed on the current collector, thereby increasing a battery capacity per unit volume of the active material layer.

The active material layer preferably has a density of from 1.2 to 2.0 g/cm$^3$, and more preferably from 1.5 to 1.8 g/cm$^3$. The density is preferably 1.2 g/cm$^3$ or more, and more preferably 1.5 g/cm$^3$ or more, because a decrease in capacity of the battery due to an increase in thicknesses of the electrodes can be suppressed. The density is preferably 2.0 g/cm$^3$ or less and more preferably 1.8 g/cm$^3$ or less because the amount of an electrolytic liquid held in voids decreases due to a decrease in voids in the electrode, the migration of alkali ions such as lithium ions decreases, and deterioration of rapid charge-discharge characteristics can be suppressed.

As the dispersion medium, a known dispersion medium can be used, and examples thereof include an organic solvent such as alcohol and water.

As the current collector, a known current collector can be used, and examples thereof include metal thin films such as rolled copper foil, electrolytic copper foil, and stainless steel foil.

Secondary Battery

The carbon material according to the present embodiment can be used in a secondary battery. The basic configuration of the secondary battery, particularly the lithium ion secondary battery, is the same as that of a known lithium ion secondary battery, and usually, it is preferable to include a positive electrode and a negative electrode capable of storing and releasing lithium ions, and an electrolyte. The carbon material according to the present embodiment is used for the negative electrode active material layer constituting the negative electrode, and a suitable aspect thereof is the same as the suitable aspect described in the above Negative Electrode.

The positive electrode is produced by forming, on a current collector, a positive electrode active material layer containing a positive electrode active material and a binder, and a known positive electrode can be used.

As the electrolyte, any known electrolyte may be used. For example, a nonaqueous electrolytic liquid in which a lithium salt is dissolved in a nonaqueous solvent, or a nonaqueous electrolytic liquid formed into a gel, rubber, or solid sheet with an organic polymer compound or the like is used. Alternatively, a solid electrolyte may be used.

In the case of using a nonaqueous electrolytic liquid as the electrolyte, a porous separator such as a porous membrane or a nonwoven fabric may be interposed between the positive electrode and the negative electrode in order to prevent a short circuit between the electrodes. As the separator, a known separator can be adopted. In this case, the nonaqueous electrolytic liquid is used by impregnating a porous separator with the nonaqueous electrolytic liquid.

The method for manufacturing a secondary battery includes forming a negative electrode active material layer on a current collector by using the carbon material according to the present embodiment to produce the negative electrode.

That is, an aspect of the method for manufacturing a secondary battery according to the present embodiment includes forming a negative electrode active material layer on a current collector by using the carbon material described in the above Carbon Material to produce the negative electrode, and the secondary battery includes a positive electrode, a negative electrode, and an electrolyte. Here, a preferred aspect of the carbon material is the same as the preferred aspect of the carbon material described in the above Carbon Material.

In addition, an aspect of the method for manufacturing a secondary battery according to the present embodiment includes forming a negative electrode active material layer on a current collector by using the cured product-containing carbon material described in the above Cured Product-Containing Carbon Material to produce the negative electrode, and the secondary battery includes a positive electrode, a negative electrode, and an electrolyte. Here, a preferred aspect of the cured product-containing carbon material is the same as the preferred aspect of the cured product-containing carbon material described in the above Cured Product-Containing Carbon Material.

Application

The negative electrode of the secondary battery using the carbon material according to the present embodiment described in the above Carbon Material can perform a stable negative electrode operation, and has a good initial efficiency while maintaining a high initial discharge capacity. Therefore, the carbon material of the present invention can be suitably used as a negative electrode active material of a secondary battery, can be more suitably used as a negative electrode active material of a nonaqueous secondary battery, and can be particularly suitably used as a negative electrode active material of a nonaqueous lithium ion secondary battery.

In addition, since the cured product according to the present embodiment described in the above Cured Product can achieve sufficient reductions in elution rates and swelling rates in water and organic solvent, the cured product-containing carbon material described in the above Cured Product-containing Carbon Material, which contains the cured product, is excellent in suppression of side reactions in a battery, can be more suitably used as a negative electrode active material of a nonaqueous secondary battery, and can be particularly suitably used as a negative electrode active material of a lithium ion secondary battery.

The carbon material, the composition, the cured product, the cured product-containing carbon material, the negative electrode, the secondary battery, and the methods for manufacturing them according to the present embodiment, and the method for modifying a carbon material have been described above, but the following may also be indicated as an aspect of the present invention.

Aspect 1

[1-1] A carbon material containing:

a carbon material raw material; and
silicon atoms as a constituent element,
wherein a value represented by x/y (atom%·g/m$^2$) is from 0.3 to 1 atom%·g/m$^2$, where x (atom%) is an atomic concentration of silicon atoms in the carbon material and y (m$^2$/g) is a specific surface area of the carbon material.

[1-2] The carbon material according to [1-1], wherein an integrated area of pores having a pore size of 1 nm or less, as determined by pore size distribution analysis using the Grand Canonical Monte Carlo (GCMC) method as a molecular simulation method, is 0.01 m$^2$/g or less.

[1-3] The carbon material according to [1-1] or [1-2], wherein the carbon material raw material contains at least one selected from the group consisting of artificial graphite and natural graphite.

[1-4] The carbon material according to any one of [1-1] to [1-3], wherein x, which is the atomic concentration of silicon atoms, is from 0.1 to 15 atom%.

[1-5] The carbon material according to any one of [1-1] to [1-4], wherein y, which is the specific surface area, is from 1 to 15 m$^2$/g.

[1-6] The carbon material according to any one of [1-1] to [1-5], wherein a Raman R value represented by the following equation is from 0.01 to 0.7:

Raman R value = (intensity $I_B$ of peak $P_B$ near 1360 cm$^{-1}$ in Raman spectrum analysis)/(intensity $I_A$ of peak $P_A$ near 1580 cm$^{-1}$ in Raman spectrum analysis).

[1-7] The carbon material according to any one of [1-1] to [1-6], which is used in a secondary battery.

[1-8] A method for manufacturing a carbon material, the method including mixing a carbon material raw material and a silicon-containing compound in a manner that a value represented by x/y (atom%·g/m$^2$) is from 0.3 to 1 atom%·g/m$^2$, where x (atom%) is an atomic concentration of silicon atoms in the carbon material and y (m$^2$/g) is a specific surface area of the carbon material.

[1-9] The method for manufacturing a carbon material according to [1-8], wherein the carbon material raw material contains at least one selected from the group consisting of artificial graphite and natural graphite.

[1-10] The method for manufacturing a carbon material according to [1-8] or [1-9], wherein the carbon material raw material has a Raman R value represented by the following equation of from 0.01 to 0.7:

Raman R value = (intensity $I_B$ of peak $P_B$ near 1360 cm$^{-1}$ in Raman spectrum analysis)/(intensity $I_A$ of peak $P_A$ near 1580 cm$^{-1}$ in Raman spectrum analysis).

[1-11] The method for manufacturing a carbon material according to any one of [1-8] to [1-10], the method including heating a mixture produced after the mixing.

[1-12] The method for manufacturing a carbon material according to any one of [1-8] to [1-11], wherein x, which is the atomic concentration of silicon atoms, is from 0.1 to 15 atom%.

[1-13] The method for manufacturing a carbon material according to any one of [1-8] to [1-12], wherein y, which is the specific surface area, is from 1 to 15 m$^2$/g.

[1-14] A method for manufacturing a negative electrode, the method including forming a negative electrode active material layer on a current collector by using the carbon material described in any one of [1-1] to [1-7] to produce a negative electrode.

[1-15] A method for manufacturing a secondary battery including a positive electrode, a negative electrode, and an electrolyte, the method including:
forming a negative electrode active material layer on a current collector by using the carbon material described in any one of [1-1] to [1-7] to produce the negative electrode.

Aspect 2

[2-1] A carbon material containing:

a carbon material raw material; and
aluminum atoms as a constituent element,
wherein a value represented by x/y (atom%·g/m$^2$) is from 0.05 to 1 atom%·g/m$^2$, where x (atom%) is an atomic concentration of aluminum atoms in the carbon material and y (m$^2$/g) is a specific surface area of the carbon material.

[2-2] The carbon material according to [2-1], further containing phosphorus atoms as a constituent element, wherein an atomic concentration of phosphorus atoms in the carbon material is from 0.1 to 1 when the atomic concentration of aluminum atoms in the carbon material is 1.

[2-3] The carbon material according to [2-1] or [2-2], wherein an integrated area of pores having a pore size of 1 nm or less, as determined by pore size distribution analysis using the Grand Canonical Monte Carlo (GCMC) method as a molecular simulation method, is 0.01 $m^2/g$ or less.

[2-4] The carbon material according to any one of [2-1] to [2-3], wherein the carbon material raw material contains at least one selected from the group consisting of artificial graphite and natural graphite.

[2-5] The carbon material according to any one of [2-1] to [2-4], wherein x, which is the atomic concentration of aluminum atoms, is from 0.1 to 15 atom%.

[2-6] The carbon material according to any one of [2-1] to [2-5], wherein y, which is the specific surface area, is from 1 to 15 $m^2/g$.

[2-7] The carbon material according to any one of [2-1] to [2-6], wherein a Raman R value represented by the following equation is from 0.01 to 0.7:

Raman R value = (intensity $I_B$ of peak $P_B$ near 1360 $cm^{-1}$ in Raman spectrum analysis)/(intensity $I_A$ of peak $P_A$ near 1580 $cm^{-1}$ in Raman spectrum analysis).

[2-8] The carbon material according to any one of [2-1] to [2-7], which is used in a secondary battery.

[2-9] A method for manufacturing a carbon material, the method including mixing a carbon material raw material and an aluminum-containing compound in a manner that a value represented by x/y (atom%·g/$m^2$) is from 0.05 to 1 atom%·g/$m^2$, where x (atom%) is an atomic concentration of aluminum atoms in the carbon material and y ($m^2/g$) is a specific surface area of the carbon material.

[2-10] The method for manufacturing a carbon material according to [2-9], wherein in the mixing, a phosphorus-containing compound is further mixed, and

an atomic concentration of phosphorus atoms in the carbon material is from 0.1 to 1 when the atomic concentration of aluminum atoms in the carbon material is 1.

[2-11] The method for manufacturing a carbon material according to [2-9] or [2-10], wherein the carbon material raw material contains at least one selected from the group consisting of artificial graphite and natural graphite.

[2-12] The method for manufacturing a carbon material according to any one of [2-9] to [2-11], wherein the carbon material raw material has a Raman R value represented by the following equation of from 0.01 to 0.7:

Raman R value = (intensity $I_B$ of peak $P_B$ near 1360 $cm^{-1}$ in Raman spectrum analysis)/(intensity $I_A$ of peak $P_A$ near 1580 $cm^{-1}$ in Raman spectrum analysis).

[2-13] The method for manufacturing a carbon material according to any one of [2-9] to [2-12], the method including heating a mixture produced after the mixing.

[2-14] The method for manufacturing a carbon material according to any one of [2-9] to [2-13], wherein x, which is the atomic concentration of aluminum atoms, is from 0.1 to 15 atom%.

[2-15] The method for manufacturing a carbon material according to any one of [2-9] to [2-14], wherein y, which is the specific surface area, is from 1 to 15 $m^2/g$.

[2-16] A method for manufacturing a negative electrode, the method including forming a negative electrode active material layer on a current collector by using the carbon material described in any one of [2-1] to [2-8] to produce a negative electrode.

[2-17] A method for manufacturing a secondary battery including a positive electrode, a negative electrode, and an electrolyte, the method including forming a negative electrode active material layer on a current collector by using the carbon material described in any one of [2-1] to [2-8] to produce the negative electrode.

Aspect 3

[3-1] A composition containing:

a compound (A) containing a polyoxyalkylene structure; and
a crosslinkable siloxane compound (B) containing a Q unit.

[3-2] The composition according to [3-1], wherein a content proportion of the polyoxyalkylene structure is from 10 mass% to 60 mass%.

[3-3] The composition according to [3-1] or [3-2], wherein a total content proportion of the Q units is from 10 mass% to 50 mass%.

[3-4] The composition according to any one of [3-1] to [3-3], wherein the compound (A) contains a crosslinkable silicon unit.

[3-5] The composition according to any one of [3-1] to [3-4], wherein the compound (A) contains a compound having two crosslinkable silicon units per molecule.

[3-6] The composition according to any one of [3-1] to [3-5], further containing a solvent.

[3-7] The composition according to any one of [3-1] to [3-6], further containing a boron-containing compound (C).

[3-8] The composition according to any one of [3-1] to [3-7], wherein the composition is a thermosetting composition.

[3-9] A method for manufacturing a cured product, the method including heating the composition described in any one of [3-1] to [3-8].

[3-10] A method for manufacturing a cured product-containing carbon material, the method including heating the composition described in any one of [3-1] to [3-8] in the presence of a carbon material.

[3-11] The method for manufacturing a cured product-containing carbon material according to [3-10], wherein the produced cured product-containing carbon material is used as a negative electrode active material.

[3-12] A method for manufacturing a negative electrode, the method including forming a negative electrode active material layer on a current collector by using a cured product-containing carbon material produced by the production method according to [3-10] to produce a negative electrode.

[3-13] A method for manufacturing a secondary battery including a positive electrode, a negative electrode, and an electrolyte, the method including forming a negative electrode active material layer on a current collector by using the cured product-containing carbon material produced by the manufacturing method according to [3-10] to produce a negative electrode.

[3-14] A cured product containing:

a polyoxyalkylene structure; and
a three dimensional siloxane structure containing a Q unit.

[3-15] The cured product according to [3-14], wherein a content proportion of the polyoxyalkylene structure is from 20 mass% to 80 mass% per 100 mass% of the cured product.

[3-16] The cured product according to [3-14] or [3-15], wherein a content proportion of a silicon element is from 10 mass% to 40 mass% per 100 mass% of the cured product.

[3-17] The cured product according to any one of [3-14] to [3-16], wherein a total content proportion of the Q units is from 20 mass% to 60 mass% per 100 mass% of the cured product.

[3-18] A cured product-containing carbon material containing:

the cured product described in any one of [3-14] to [3-17]; and
a carbon material.

[3-19] The cured product-containing carbon material according to [3-18], which is used as a negative electrode active material.

[3-20] A method for manufacturing a negative electrode, the method including forming a negative electrode active material layer on a current collector by using the cured product-containing carbon material described in [3-18] to produce a negative electrode.

[3-21] A method for manufacturing a secondary battery including a positive electrode, a negative electrode, and an electrolyte, the method including forming a negative electrode active material layer on a current collector by using the cured product-containing carbon material described in [3-18] to produce a negative electrode.

Examples

Hereinafter, the present invention will be described in more detail by way of Examples, but the present invention is not limited to the description of the following Examples without departing from the gist of the present invention.

Test Example; Carbon Material

Example A1-1

As a carbon material raw material, 10 g of scaly natural graphitic particles having a specific surface area of 8.2 $m^2/g$ and a Raman R value of 0.26 were dispersed in 100 mL of ethanol. To the dispersion liquid, 1.5 g of vinyltris(2-methoxyethoxy)silane as a silicon-containing compound was added, and then, the mixture was stirred for 30 minutes. After the mixture was stirred, ethanol was removed and the mixture was heated at 150°C for 1 hour under a nitrogen atmosphere. After cooling, washing with ethanol and vacuum drying were performed in this order to produce a carbon material.

Comparative Example A1-1

As a carbon material raw material, 10 g of scaly natural graphitic particles having a specific surface area of 8.2 $m^2/g$ and a Raman R value of 0.26 were heated at 150°C for 1 hour under a nitrogen atmosphere. After cooling, washing with ethanol and vacuum drying were performed in this order to produce a carbon material.

Example A1-2

As a carbon material raw material, 10 g of artificial graphitic particles having a specific surface area of 1.5 $m^2/g$ and a Raman R value of 0.05 were dispersed in 100 mL of ethanol. To the dispersion liquid, 1.5 g of vinyltris(2-methoxyethoxy)silane as a silicon-containing compound was added, and then, the mixture was stirred for 30 minutes. After the mixture was stirred, ethanol was removed and the mixture was heated at 150°C for 1 hour under a nitrogen atmosphere. After cooling, washing with ethanol and vacuum drying were performed in this order to produce a carbon material.

Comparative Example A1-2

As a carbon material raw material, 10 g of artificial graphitic particles having a specific surface area of 1.5 $m^2/g$ and a Raman R value of 0.05 were heated at 150°C for 1 hour under a nitrogen atmosphere. After cooling, washing with ethanol and vacuum drying were performed in this order to produce a carbon material.

Test Example; Secondary Battery

Examples A2-1 and A2-2 and Comparative Examples A2-1 and A2-2

Using the carbon materials produced in Examples A1-1 and A1-2 and Comparative Examples A1-1 and A1-2 as negative electrode active materials, negative electrodes each having a current collector and a negative electrode active material layer formed on the current collector were produced.
Specifically, 98 parts by mass of the carbon material produced in Example A1-1, 1 part by mass of carboxymethyl cellulose (CMC), and 2.1 parts by mass of a 48 mass% aqueous dispersion of styrene-butadiene rubber (SBR) were kneaded using a hybridization mixer to prepare a slurry.
The resulting slurry was applied onto a copper foil having a thickness of 20 μm as the current collector so as to be attached at a basis weight of from 7 to 8 $mg/cm^2$, and dried. Thereafter, the product was roll-pressed with a 250 mm φ roll press equipped with a load cell in a manner that the negative electrode active material layer had a density of from 1.6 to 1.7 $g/cm^3$, punched into a circular shape having a diameter of 12.5 mm, and vacuum-dried at 90°C for 8 hours to produce a negative electrode.

Measurement and Evaluation

Atomic Concentration $x_{(Si)}$ (Atom%) of Silicon Atom

The atomic concentration $x_{(Si)}$ (atom%) of silicon atoms in the carbon material was measured using an X-ray photoelectron spectrometer (KRATOS ULTRA2, available from Shimadzu Corporation).
Specifically, the carbon material as the sample was embedded in indium metal and sampled under the following conditions: X-ray source: monochromatized Al-Kα; power: 15 kV-225 W; charge neutralization: filament current, filament bias, and charge balance = 0.43 V, 1 V, and 4 V; pass energy: wight spectrum of 160 eV and narrow spectrum of 20 eV; measuring region: 700 μm × 300 μm; take-off angle: 90°; and energy correction: Si 2p = 103.5 eV ($SiO_2$). Then, the atomic concentration $x_{(Si)}$ (atom%) of the silicon atoms was measured. The results are shown in Table 1.

Specific Surface Area

The specific surface area of the carbon material was measured using a specific surface area measuring apparatus (Macsorb HM Model-1210, available from Mountech Co., Ltd.).

Specifically, the carbon material as a sample was pretreated at 150°C under a nitrogen flow, and then cooled to a liquid nitrogen temperature. The specific surface area of the carbon material was measured according to a nitrogen adsorption single-point BET method based on a gas flow method, using a nitrogen-helium mixed gas, whose relative pressure of nitrogen to the atmospheric pressure was accurately adjusted to 0.3. The results are shown in Table 1.

Raman R Value

The carbon material was naturally dropped into a measurement cell of a Raman spectrometer (LabRAM-HR Evolutin, available from Horiba, Ltd.) to fill the measurement cell with the carbon material. Subsequently, measurement was performed while the inside of the measurement cell was irradiated with argon ion laser light (wavelength: 514.5 nm) and the measurement cell was rotated in a plane perpendicular to the laser light, whereby the Raman spectrum was obtained.

The measurement conditions were as follows.

Wavelength of argon ion laser light: 514.5 nm
Laser power on sample: 25 mW
Resolution: 4 cm$^{-1}$
Measurement range: 1100 cm$^{-1}$ to 1730 cm$^{-1}$
Peak intensity measurement, peak half-width measurement: background processing, smoothing processing (convolution by simple average of 5 points)
From the Raman spectrum obtained as described above, the intensity $I_B$ of the peak $P_B$ near 1360 cm$^{-1}$ and the intensity $I_A$ of the peak $P_A$ near 1580 cm$^{-1}$ were determined, and the Raman R value represented by (intensity $I_B$/intensity $I_A$) was determined.

Initial Discharge Capacity and Initial Efficiency

The produced negative electrode and a lithium foil as a counter electrode were stacked with a separator impregnated with an electrolytic liquid interposed therebetween to produce a battery for a charge-discharge test. As the electrolytic liquid, a solution prepared by dissolving LiPF$_6$ in a mixed solution of ethylene carbonate/ethyl methyl carbonate = 30/70 (volume ratio) so as to attain 1.2 mol/L was used.

The battery for the charge-discharge test was charged at a current density of 0.08 mA/cm$^2$ until the voltage of the battery reached 5 mV, and then charged at a constant voltage of 5 mV until the current value reached 0.03 mA/cm$^2$. This is referred to as initial charge.

Subsequently, the battery was discharged at a current density of 0.2 mA/cm$^2$ until the voltage of the battery reached 1.5 V. This is referred to as initial discharge.

In addition, in the battery for the charge-discharge test, the "charge" refers to passing a current in a direction in which lithium is doped into the negative electrode, and the "discharge" refers to passing a current in a direction in which lithium is dedoped from the negative electrode.

The initial charge capacity and the initial discharge capacity (mAh/g) were calculated by subtracting the mass of a copper foil (current collector) punched out to have the same area as the negative electrode from the mass of the entire negative electrode, thereby calculating the mass of the negative electrode active material.

Then, the current capacities during initial charge and discharge were divided by the mass of the negative electrode active material calculated above to obtain the initial charge capacity and the initial discharge capacity, and the initial efficiency was calculated by Equation (II) below. The results are shown in Table 2.

$$\text{Initial efficiency (\%)} = \text{initial discharge capacity/initial charge capacity} \times 100 \quad \text{(II)}$$

Test Example; Secondary Battery

Example A3-1

A methanol solution 1 containing 10 mass% of the same composition as that of Example C6 described later was prepared. A methanol solution 2 was prepared by dispersing 10 g of the graphitic material produced in Example A1-2 in 100 mL of methanol. To the methanol solution 2, 1 g of the methanol solution 1 was added, and then, the mixture was stirred for 1 hour. After the mixture was stirred, methanol was removed, and the resulting mixture was heated to 120°C to produce a cured product-containing carbon material of Example A3-1.

Using the cured product-containing carbon material produced above, a negative electrode was produced in the same manner as in Example A2-1.

Example A3-2

A negative electrode was produced in the same manner as in Example A3-1 except that 5 g of the methanol solution 1 was added to the methanol solution 2.

Example A3-3

A negative electrode was produced in the same manner as in Example A3-1 except that 10 g of the graphitic material produced in Comparative Example A1-2 was dispersed in 100 mL of methanol to prepare a methanol solution 2.

The produced negative electrode and a lithium foil as a counter electrode were stacked with a separator impregnated with an electrolytic liquid interposed therebetween to produce a battery for a charge-discharge test. As the electrolytic liquid, a solution prepared by dissolving $LiPF_6$ in a mixed solution of ethylene carbonate/ethyl methyl carbonate = 30/70 (volume ratio) so as to attain 1.2 mol/L was used. The initial charge capacity and the initial discharge capacity were determined by the same evaluation methods as in Examples A2-1 and A2-2, and the obtained results are shown in Table 3.

[Table 1]

Table 1

|  | Silicon atom atomic concentration $x_{(Si)}$ [atom%] | Specific surface area y [m$^2$/g] | $x_{(Si)}/y$ [atom%·g/m$^2$] |
|---|---|---|---|
| Example A1-1 | 2.9 | 4.5 | 0.65 |
| Comparative Example A1-1 | 0.1 | 8.2 | 0.01 |
| Example A1-2 | 0.9 | 1.4 | 0.64 |
| Comparative Example A1-2 | 0 | 1.5 | 0.00 |

[Table 2]

Table 2

|  | Initial discharge capacity [mAh/g] | Initial efficiency [%] |
|---|---|---|
| Example A2-1 | 368 | 89.1 |
| Comparative Example A2-1 | 370 | 88.5 |
| Example A2-2 | 347 | 89.9 |
| Comparative Example A2-2 | 347 | 88.3 |

[Table 3]

Table 3

|  | Initial discharge capacity [mAh/g] | Initial efficiency [%] |
|---|---|---|
| Example A3-1 | 362 | 90 |

(continued)

| | Initial discharge capacity [mAh/g] | Initial efficiency [%] |
|---|---|---|
| Example A3-2 | 347 | 89.9 |
| Example A3-3 | 347 | 89.3 |

From the above results, it was found that the carbon material according to the present embodiment has x/y in a predetermined range, that is, the atomic concentration of silicon atoms on the surface of the carbon material is in an appropriate range, and therefore that, when used for the negative electrode of the secondary battery, the carbon material can improve the initial efficiency while maintaining the initial discharge capacity, and enables a stable negative electrode operation.

Test Example; Carbon Material

Example B1-1

As a carbon material raw material, 10 g of scaly natural graphitic particles having a specific surface area of 8.2 $m^2$/g and a Raman R value of 0.26 were dispersed in 100 mL of ethanol. To the dispersion liquid, 1.5 g of vinylphosphonic acid as a phosphorus-containing compound was added, the mixture was stirred for 30 minutes. After the mixture was stirred, ethanol was removed and the mixture was heated at 150°C for 1 hour under a nitrogen atmosphere. After cooling, washing with ethanol and vacuum drying were performed in this order to produce a phosphoric acid group -containing carbon material raw material.

Subsequently, the phosphoric acid group-containing carbon material raw material produced above was dispersed in 80 mL of ethanol. To this dispersion liquid, 20 mL of an ethanol solution of 0.3 g of (ethylacetoacetato) aluminum diisopropoxide was added dropwise while the dispersion liquid was stirred. After the dropwise addition, the mixture was heated to 40°C and stirred for 1 hour, and then ethanol was removed. Thereafter, the mixture was heated at 150°C for 1 hour in air and cooled to produce a carbon material.

Example B1-2

As a carbon material raw material, 10 g of scaly natural graphitic particles having a specific surface area of 8.2 $m^2$/g and a Raman R value of 0.26 were dispersed in 100 mL of water. To the dispersion liquid, 1 g of ammonium persulfate was added, and the mixture was heated to 40°C and stirred for 1 hour. After the mixture was stirred, the powder was separated by filtration, and the resulting powder was dispersed in 80 mL of ethanol. To this dispersion liquid, 20 mL of an ethanol solution of 0.3 g of (ethylacetoacetato) aluminum diisopropoxide was added dropwise while the dispersion liquid was stirred. After the dropwise addition, the mixture was heated to 40°C and stirred for 1 hour, and then ethanol was removed. Thereafter, the mixture was heated at 150°C for 1 hour in air and cooled to produce a carbon material.

Comparative Example B1-1

As a carbon material raw material, 10 g of scaly natural graphitic particles having a specific surface area of 8.2 $m^2$/g and a Raman R value of 0.26 were heated at 150°C for 1 hour under a nitrogen atmosphere. After cooling, washing with ethanol and vacuum drying were performed in this order to produce a carbon material.

Comparative Example B1-2

As a carbon material raw material, 10 g of scaly natural graphitic particles having a specific surface area of 8.2 $m^2$/g and a Raman R value of 0.26 were dispersed in 100 mL of ethanol. To this dispersion liquid, 1.5 g of vinylphosphonic acid was added, and then, the mixture was stirred for 30 minutes. After the mixture was stirred, ethanol was removed and the mixture was heated at 150°C for 1 hour under nitrogen. After cooling, washing with ethanol and vacuum drying were performed in this order to produce a carbon material.

Test Example; Secondary Battery

Examples B2-1 and B2-2 and Comparative Examples B2-1 and B2-2

Using the carbon materials produced in Examples B1-1 and B1-2 and Comparative Examples B1-1 and B1-2 as negative electrode active materials, negative electrodes each having a current collector and a negative electrode active material layer formed on the current collector were produced.

Specifically, 98 parts by mass of the carbon material produced in Example B1-1, 1 part by mass of carboxymethyl cellulose (CMC), and 2.1 parts by mass of a 48 mass% aqueous dispersion of styrenebutadiene rubber (SBR) were kneaded using a hybridization mixer to prepare a slurry.

The resulting slurry was applied onto a copper foil having a thickness of 20 $\mu$m as the current collector so as to be attached at a basis weight of from 7 to 8 mg/cm$^2$, and dried. Thereafter, the product was roll-pressed with a 250 mm $\varphi$ roll press equipped with a load cell in a manner that the negative electrode active material layer had a density of from 1.6 to 1.7 g/cm$^3$, punched into a circular shape having a diameter of 12.5 mm, and vacuum-dried at 90°C for 8 hours to produce a negative electrode.

Measurement and Evaluation

Atomic Concentration $x_{(A1)}$ (Atom%) of Aluminum Atom and Phosphorus Atom

The atomic concentration $x_{(A1)}$ (atom%) of aluminum atoms and the atomic concentration (atom%) of phosphorus atoms in the carbon materials were measured using an X-ray photoelectron spectrometer (KRATOS ULTRA2, available from Shimadzu Corporation).

Specifically, the carbon material as the sample was embedded in indium metal and sampled under the conditions: X-ray source: monochromatized A1-K$\alpha$; power: 15 kV-225 W; charge neutralization: filament current, filament bias, and charge balance = 0.43 V, 1 V, and 4 V; pass energy: wight spectrum of 160 eV and narrow spectrum of 20 eV; measuring region: 700 $\mu$m $\times$ 300 $\mu$m; take-off angle: 90°; and energy correction: Si 2p = 103.5 eV (SiO$_2$), and the atomic concentrations (atom%) of the aluminum atoms and the phosphorus atoms were measured. The results are shown in Table 4.

Specific Surface Area

The specific surface area of the carbon material was measured using a specific surface area measuring apparatus (Macsorb HM Model-1210, available from Mountech Co., Ltd.).

Specifically, the carbon material as a sample was pretreated at 150°C under a nitrogen flow, and then cooled to a liquid nitrogen temperature. The specific surface area of the carbon material was measured according to a nitrogen adsorption single-point BET method based on a gas flow method, using a nitrogen-helium mixed gas, whose relative pressure of nitrogen to the atmospheric pressure was accurately adjusted to 0.3. The results are shown in Table 4.

Raman R Value

The carbon material was naturally dropped into a measurement cell of a Raman spectrometer (LabRAM-HR Evolutin, available from Horiba, Ltd.) to fill the measurement cell with the carbon material. Subsequently, measurement was performed while the inside of the measurement cell was irradiated with argon ion laser light (wavelength: 514.5 nm) and the measurement cell was rotated in a plane perpendicular to the laser light, whereby the Raman spectrum was obtained.

The measurement conditions were as follows.

Wavelength of argon ion laser light: 514.5 nm
Laser power on sample: 25 mW
Resolution: 4 cm$^{-1}$
Measurement range: 1100 cm$^{-1}$ to 1730 cm$^{-1}$
Peak intensity measurement, peak half-width measurement: background processing, smoothing processing (convolution by simple average of 5 points)
From the Raman spectrum obtained as described above, the intensity $I_B$ of the peak $P_B$ near 1360 cm$^{-1}$ and the intensity $I_A$ of the peak $P_A$ near 1580 cm$^{-1}$ were determined, and the Raman R value represented by (intensity $I_B$/intensity $I_A$) was determined.

Initial Discharge Capacity and Initial Efficiency

The produced negative electrode and a lithium foil as a counter electrode were stacked with a separator impregnated with an electrolytic liquid interposed therebetween to produce a battery for a charge-discharge test. As the electrolytic liquid, a solution prepared by dissolving LiPF$_6$ in a mixed solution of ethylene carbonate/ethyl methyl carbonate = 30/70 (volume ratio) so as to attain 1.2 mol/L was used.

The battery for the charge-discharge test was charged at a current density of 0.08 mA/cm$^2$ until the voltage of the battery reached 5 mV, and then charged at a constant voltage of 5 mV until the current value reached 0.03 mA/cm$^2$. This is referred to as initial charge.

Subsequently, the battery was discharged at a current density of 0.2 mA/cm$^2$ until the voltage of the battery reached 1.5 V. This is referred to as initial discharge.

In addition, in the battery for the charge-discharge test, the "charge" refers to passing a current in a direction in which lithium is doped into the negative electrode, and the "discharge" refers to passing a current in a direction in which lithium is dedoped from the negative electrode.

The initial charge capacity and the initial discharge capacity (mAh/g) were calculated by subtracting the mass of a copper foil (current collector) punched out to have the same area as the negative electrode from the mass of the entire negative electrode, thereby calculating the mass of the negative electrode active material.

Then, the current capacities during initial charge and discharge were divided by the mass of the negative electrode active material calculated above to obtain the initial charge capacity and the initial discharge capacity, and the initial efficiency was calculated by Equation (II) below. The results are shown in Table 5.

$$\text{Initial efficiency (\%)} = \text{initial discharge capacity/initial charge capacity} \times 100 \ \ (\text{II})$$

[Table 4]

Table 4

|  | Aluminum atom atomic concentration $x_{(A1)}$ [atom%] | Phosphorus atom atomic concentration ratio | Specific surface area y [m$^2$/g] | $x_{(A1)}$/y [atom%·g/m$^2$] |
|---|---|---|---|---|
| Example B1-1 | 3.6 | 0.26 | 8.1 | 0.44 |
| Example B1-2 | 2.9 | 0.00 | 7.9 | 0.36 |
| Comparative Example B1-1 | 0 | - | 8.2 | 0 |
| Comparative Example B1-2 | 0 | - | 3.4 | 0 |

[Table 5]

Table 5

|  | Initial discharge capacity [mAh/g] | Initial efficiency [%] |
|---|---|---|
| Example B2-1 | 365 | 91.0 |
| Example B2-2 | 363 | 89.3 |
| Comparative Example B2-1 | 370 | 88.5 |
| Comparative Example B2-2 | 366 | 88.4 |

From the above results, it was found that the carbon material according to the present embodiment has x/y in a predetermined range, that is, the atomic concentration of aluminum atoms on the surface of the carbon material is in an appropriate range, and therefore that, when used for the negative electrode of the secondary battery, the carbon material can improve the initial efficiency while maintaining the initial discharge capacity, and enables a stable negative electrode operation.

Test Example; Composition and Cured Product

Method for Measuring Elution Rate and Swelling Rate

In a 20 mL glass bottle, 0.15 g of the cured product produced in each of Examples and Comparative Examples was accurately weighed, and the mass ($W_S$) was recorded. Subsequently, 15 mL of demineralized water at 23°C was added to the glass bottle with a graduated cylinder, and the glass bottle was sealed. The cured product was immersed in the demineralized water for 1 hour while the glass bottle was shaken every 10 minutes. After 1 hour, the cured product was taken out with tweezers, and excess water droplets were absorbed with a paper towel, and then the cured product was placed in an aluminum cup on a balance and accurately weighed, and the wet weight ($W_W$) was recorded. Thereafter, the cured product was placed in a dryer at 110°C together with the aluminum cup, dried for from 2 to 3 hours until the weight became constant, then returned to 23°C in a desiccator, accurately weighed with a balance, and the dry weight ($W_D$) was recorded. The elution rate in water was calculated by Equation (III) below, and the swelling rate in water was calculated by Equation (VI) below.

The elution rate in organic solvent and the swelling rate in organic solvent were measured by the same operation as described above except that the demineralized water was changed to ethyl methyl carbonate.

$$\text{Elution rate [mass\%]} = (W_S - W_D) \div W_S \times 100 \qquad (III)$$

$$\text{Swelling rate [mass\%]} = (W_W - W_S) \div W_S \times 100 \qquad (VI)$$

Raw Material

• Compound (A-1)

As a compound (A-1), bis(3-triethoxysilylpropyl)polyethyleneoxide (25-30 EO) (product name "SIB1824.84", available from Gelest, Inc.) was used. The compound (A-1) was a compound having alkoxysilyl groups as T units at both ends of a polyoxyalkylene structure via an organic linking chain, and has a solid content in terms of oxide of 86 mass%.

The solid content in terms of oxide was a calculated value of the molecular weight when all alkoxy groups of a compound are hydrolyzed and completely converted into siloxane bonds, expressed as a percentage relative to the molecular weight of the original compound.

• Compound (A-2)

As a compound (A-2), N,N'-bis-[(3-triethoxysilylpropyl) aminocarbonyl] polyethyleneoxide (10-15 EO) (product name "SIB1824.82", available from Gelest, Inc.) was used. The compound (A-2) was a compound having alkoxysilyl groups as T units at both terminals of a polyoxyalkylene structure via an organic linking chain, and has a solid content in terms of oxide of 79 mass%.

• Compound (A-3)

As a compound (A-3), N,N'-bis-[(3-triethoxysilylpropyl) aminocarbonyl] polyethyleneoxide (7-10 EO) (product name "SIB1824.81", available from Gelest, Inc.) was used. The compound (A-3) was a compound having alkoxysilyl groups as T units at both terminals of a polyoxyalkylene structure via an organic linking chain, and has a solid content in terms of oxide of 75 mass%.

• Compound (B-1)

A compound (B-1) was produced by stirring 30.8 parts by mass of a partially hydrolyzed oligomer of tetramethoxysilane consisting of Q-unit silicon (product name "MKC Silicate MS51"), 62.4 parts by mass of methanol, 0.3 parts by mass of catalytic maleic acid and 6.5 parts by mass of demineralized water for hydrolysis in a closed vessel at 23°C for 1 hour to carry out hydrolysis polycondensation, and further allowing the product to stand at 23°C for 24 hours. The solid content of the compound (B-1) was 16 mass% in terms of $SiO_2$.

• Manufacturing Example 1: Manufacture of Compound (C-1) Solution

Phenylboronic acid (available from Tokyo Chemical Industry Co., Ltd.) was used as a compound (C-1). When the compound (C-1) was used, it was diluted with methanol and used as a 20 mass% methanol solution.

Example C1

77 parts by mass of the compound (A-1), 207 parts by mass of the compound (B-1), and 4 parts by mass of 0.01 N aqueous acetic acid solution for hydrolysis of the compound (A-1) were blended in a manner that the solid contents derived from the compound (A-1) and the compound (B-1) in the cured product were 70 mass% and 30 mass%, respectively, and the mixture was stirred at 23°C for 3 hours to produce a composition containing methanol as a solvent. The resulting composition was air-dried on an aluminum cup overnight, and then dried to a constant weight in a dryer at 120°C to produce a cured product.

The evaluation results of the resulting cured product are shown in Table 6.

Examples C2 to C6 and Comparative Examples C1 to C3

Cured products were produced in the same manner as in Example C1 except that the type of the compound (A), the content proportion of the solid content derived from the compound (A) in the cured product, the type of the compound (B), the content proportion of the solid content derived from the compound (B) in the cured product, the type of the compound (C), and the content proportion of the solid content derived from the compound (C) in the cured product were changed as shown in Table 6.

The evaluation results of the resulting cured products are shown in Table 7.

[Table 6]

Table 6

| | Compound (A) | | Compound (B) | | Compound (C) | | Content proportion of polyoxyalkylene structure in composition [mass%] | Content proportion of T unit in composition [mass%] | Content proportion of Q unit in composition [mass%] |
|---|---|---|---|---|---|---|---|---|---|
| | Type | Content proportion of cured product [mass%] | Type | Content proportion of cured product [mass%] | Type | Content proportion of cured product [mass%] | | | |
| Example C1 | (A-1) | 70 | (B-1) | 30 | - | - | 41 | 4 | 24 |
| Example C2 | (A-2) | 70 | (B-1) | 30 | - | - | 29 | 5 | 24 |
| Example C3 | (A-3) | 70 | (B-1) | 30 | - | - | 24 | 7 | 24 |
| Example C4 | (A-1) | 59.5 | (B-1) | 30 | (C-1) | 10.5 | 35 | 3 | 24 |
| Example C5 | (A-2) | 59.5 | (B-1) | 30 | (C-1) | 10.5 | 24 | 5 | 24 |
| Example C6 | (A-3) | 59.5 | (B-1) | 30 | (C-1) | 10.5 | 20 | 6 | 24 |
| Comparative Example C1 | (A-1) | 100 | - | - | - | - | 75 | 6 | 0 |
| Comparative Example C2 | (A-2) | 100 | - | - | - | - | 53 | 10 | 0 |
| Comparative Example C3 | (A-3) | 100 | - | - | - | - | 43 | 12 | 0 |

EP 4 682 205 A1

[Table 7]

Table 7

|  | Content proportion of polyoxyalkylene structure in cured product [mass%] | Content proportion of silicon element in cured product [mass%] | Content proportion of T unit in cured product [mass%] | Content proportion of Q unit in cured product [mass%] | Elution rate in water [mass%] | Elution rate in organic solvent [mass%] | Swelling rate in water [mass%] | Swelling rate in organic solvent [mass%] |
|---|---|---|---|---|---|---|---|---|
| Example C1 | 61 | 17 | 5 | 30 | 7 | 11 | 19 | 23 |
| Example C2 | 47 | 19 | 9 | 30 | 3 | 4 | 24 | 9 |
| Example C3 | 40 | 20 | 11 | 30 | 2 | 2 | 12 | 5 |
| Example C4 | 51 | 16 | 4 | 30 | 7 | 18 | 9 | 11 |
| Example C5 | 40 | 18 | 8 | 30 | 3 | 12 | 11 | 1 |
| Example C6 | 34 | 19 | 10 | 30 | 2 | 5 | 7 | 15 |
| Comparative Example C1 | 87 | 4 | 7 | 0 | 29 | 33 | 88 | 131 |
| Comparative Example C2 | 67 | 7 | 13 | 0 | 14 | 24 | 49 | 114 |
| Comparative Example C3 | 58 | 9 | 6 | 0 | 6 | 13 | 42 | 70 |

As can be seen also from Table 7, the cured products produced in Examples C1 to C6, which contained a polyoxyalkylene structure and a three dimensional siloxane structure, achieved all of reductions in elution rate in water, elution rate in organic solvent, swelling rate in water, and swelling rate in organic solvent.

On the other hand, the cured products produced in Comparative Examples C1 to C2, which did not contain a Q unit, could not achieve any of reductions in elution rate in water, elution rate in organic solvent, swelling rate in water, and swelling rate in organic solvent. In addition, the cured product produced in Comparative Example C3, which did not contain a Q unit, achieved reductions in elution rate in water and elution rate in organic solvent, but could not achieve reductions in swelling rate in water and swelling rate in organic solvent.

The present invention has been described in detail with reference to specific embodiments. However, it would be clear to a person skilled in the art that various changes and modifications can be made without departing from the spirit and scope of the present invention. The present application is based on Japanese Patent Application No. 2023-038966 filed on March 13, 2023, Japanese Patent Application No. 2023-038967 filed on March 13, 2023, and Japanese Patent Application No. 2023-040025 filed on March 14, 2023, the contents of which are incorporated herein by reference.

Industrial Applicability

The carbon material according to the present embodiment can improve the initial efficiency while maintaining the initial discharge capacity and enables a stable negative electrode operation by being used as a negative electrode active material of a secondary battery. Therefore, the carbon material can be suitably used as a negative electrode active material of a secondary battery, can be more suitably used as a negative electrode active material of a nonaqueous secondary battery, and can be particularly suitably used as a negative electrode active material of a nonaqueous lithium ion secondary battery.

The cured product according to the present embodiment can achieve sufficient reductions in elution rates and swelling rates in water and organic solvent. Therefore, the cured product-containing carbon material containing the cured product is excellent in suppression of side reactions in a battery, can be more suitably used as a negative electrode active material of a nonaqueous secondary battery, and can be particularly suitably used as a negative electrode active material of a lithium ion secondary battery.

**Claims**

1. A cured product comprising:

   a polyoxyalkylene structure; and
   a three dimensional siloxane structure containing a Q unit,
   the cured product having a swelling rate in ethyl methyl carbonate of 70 mass% or less.

2. The cured product according to claim 1, wherein a content proportion of the polyoxyalkylene structure in the cured product is from 20 mass% to 80 mass%.

3. The cured product according to claim 1, wherein a content proportion of silicon atoms in the cured product is from 10 mass% to 40 mass%.

4. The cured product according to claim 1, wherein a total content proportion of the Q units in the cured product is from 20 mass% to 60 mass%.

5. The cured product according to claim 1, wherein, after the cured product is hydrolyzed, the hydrolyzed cured product comprises a polyoxyalkylene structure and a fragment having at least two silicon atoms per molecule.

6. A cured product-containing carbon material comprising:

   the cured product described in claim 1; and
   a carbon material.

7. The cured product-containing carbon material according to claim 6, wherein

   the carbon material has a modifying component bonded to a carbon material raw material, and
   the modifying component contains at least one element selected from the group consisting of boron, aluminum, silicon, phosphorus, sulfur, and germanium.

8. The cured product-containing carbon material according to claim 7, wherein the modifying component has a binding site capable of binding to the carbon material.

9. The cured product-containing carbon material according to claim 7, wherein the modifying component has a molecular weight of 500 or less.

10. The cured product-containing carbon material according to claim 7, wherein the modifying component is represented by General Formula (1):

$$(Z)_n\text{-L-W} \qquad (1)$$

   where

   Z is a group capable of chemically binding to the carbon material,
   W is a group containing at least one element selected from the group consisting of boron, aluminum, silicon, phosphorus, sulfur, and germanium,
   L is a linker, and
   n is 1 or 2.

11. The cured product-containing carbon material according to claim 10, wherein, in General Formula (1), W is a silicon-containing group.

12. The cured product-containing carbon material according to claim 10, wherein Z in General Formula (1) includes a structure capable of being added by a Diels-Alder reaction.

13. The cured product-containing carbon material according to claim 10, wherein Z in General Formula (1) is a group containing an unsaturated bond at a terminal.

14. The cured product-containing carbon material according to claim 10, wherein Z in General Formula (1) is a vinyl group.

15. The cured product-containing carbon material according to claim 7, wherein a surface of the carbon material includes a carbon-carbon unsaturated bond and a carbon radical structure.

16. A negative electrode comprising the cured product-containing carbon material described in any one of claims 6 to 15.

17. A nonaqueous secondary battery comprising:

a positive electrode and a negative electrode capable of storing and releasing lithium ions; and
an electrolyte,
wherein
the negative electrode comprises the cured product-containing carbon material described in any one of claims 6 to 15.

## INTERNATIONAL SEARCH REPORT

| International application No. |
| --- |
| **PCT/JP2024/009866** |

| A. | CLASSIFICATION OF SUBJECT MATTER |
| --- | --- |

*C08L 71/02*(2006.01)i; *C01B 32/21*(2017.01)i; *C08L 83/06*(2006.01)i; *H01M 4/36*(2006.01)i; *H01M 4/133*(2010.01)i; *H01M 4/587*(2010.01)i; *H01M 4/1393*(2010.01)i
FI:  C08L71/02; C01B32/21; C08L83/06; H01M4/133; H01M4/1393; H01M4/36 A; H01M4/587

According to International Patent Classification (IPC) or to both national classification and IPC

| B. | FIELDS SEARCHED |
| --- | --- |

Minimum documentation searched (classification system followed by classification symbols)

C08L71/02; C01B32/21; C08L83/06; H01M4/36; H01M4/133; H01M4/587; H01M4/1393

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2010/001993 A1 (SHARP KABUSHIKI KAISHA) 07 January 2010 (2010-01-07) claims, examples | 1-6, 16-17 |
| Y | | 7-15 |
| X | JP 2010-102895 A (SHARP KABUSHIKI KAISHA) 06 May 2010 (2010-05-06) claims, examples | 1-6 |
| A | | 7-17 |
| X | JP 2001-106781 A (ARAKAWA CHEMICAL INDUSTRIES, LTD.) 17 April 2001 (2001-04-17) claims, examples | 1-5 |
| A | | 6-17 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 682 205 A1**

## INTERNATIONAL SEARCH REPORT

International application No.

**PCT/JP2024/009866**

### C. DOCUMENTS CONSIDERED TO BE RELEVANT

| Category* | Citation of document, with indication, where appropriate, of the relevant passages | Relevant to claim No. |
|---|---|---|
| X | JP 2007-242454 A (MATSUSHITA ELECTRIC INDUSTRIAL CO., LTD.) 20 September 2007 (2007-09-20)<br>claims, examples | 1-5 |
| A | | 6-17 |
| Y | JP 2005-293942 A (NEC CORPORATION) 20 October 2005 (2005-10-20)<br>claims | 7-15 |
| Y | JP 9-50809 A (JAPAN ENERGY CORP.) 18 February 1997 (1997-02-18)<br>claims | 7-15 |
| Y | JP 11-354104 A (DENSO CORPORATION) 24 December 1999 (1999-12-24)<br>claims | 7-15 |

Form PCT/ISA/210 (second sheet) (July 2022)

**INTERNATIONAL SEARCH REPORT**
Information on patent family members

International application No.

**PCT/JP2024/009866**

| Patent document cited in search report | | | Publication date (day/month/year) | Patent family member(s) | Publication date (day/month/year) |
|---|---|---|---|---|---|
| WO | 2010/001993 | A1 | 07 January 2010 | (Family: none) | |
| JP | 2010-102895 | A | 06 May 2010 | (Family: none) | |
| JP | 2001-106781 | A | 17 April 2001 | (Family: none) | |
| JP | 2007-242454 | A | 20 September 2007 | (Family: none) | |
| JP | 2005-293942 | A | 20 October 2005 | (Family: none) | |
| JP | 9-50809 | A | 18 February 1997 | (Family: none) | |
| JP | 11-354104 | A | 24 December 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007042285 A
- JP H09161848 A
- JP 2023038966 A
- JP 2023038967 A
- JP 2023040025 A

**Non-patent literature cited in the description**

- **SWEATMAN, M. B. et al.** *J. Phys. Chem.*, 2001, vol. 105, 1403